# EUROPEAN PATENT SPECIFICATION

(11) **EP 3 258 439 B1**
(45) Date of publication and mention of the grant of the patent: **08.01.2020**
(21) Application number: 16749405.3
(22) Date of filing: 04.02.2016
(51) Int. Cl.: H04L 29/08

(54) **SYSTEM AND METHOD FOR PROVIDING LOCATION-BASED INFORMATION**
SYSTEM UND VERFAHREN ZUR BEREITSTELLUNG VON STANDORTBASIERTEN INFORMATIONEN
SYSTÈME ET PROCÉDÉ POUR FOURNIR DES INFORMATIONS BASÉES SUR UN EMPLACEMENT

(30) Priority: 10.02.2015 KR 20150020286
(43) Date of publication of application: 20.12.2017
(73) Proprietor: Samsung Electronics Co., Ltd., Suwon-si, Gyeonggi-do 16677 (KR)
(72) Inventor: HAM, Jong-gyu, Suwon-si Gyeonggi-do 16509 (KR); KIM, Hwa-jung, Suwon-si Gyeonggi-do 16226 (KR); YOUM, Sun-hee, Suwon-si Gyeonggi-do 16707 (KR); CHOI, Chang-hwan, Seoul 05359 (KR)
(74) Representative: Gulde & Partner
(86) International application number: PCT/KR2016/001237
(87) International publication number: WO 2016/129865

(56) References cited:
- EP-A2- 1 102 502
- JP-A- 2014 115 681
- KR-A- 20120 057 668
- KR-A- 20150 012 266
- US-A1- 2012 109 752
- US-A1- 2013 195 322
- US-A1- 2014 087 761
- US-A1- 2014 129 336

## Description

### TECHNICAL FIELD

The present disclosure relates to systems and methods of providing information. More particularly, the present disclosure relates to a system and method of providing information by using a location-based display.

### BACKGROUND

As communication technologies are developed and more devices are developed as smart devices, location-based information providing services that provide information based on location of the devices are being suggested.

Most location-based information providing services currently suggested provide information by using a personal computing device or by using a location-based display.

The location-based information providing service using the location-based display generally provides information set by a service provider. For example, when the location-based display is provided at a platform of a train station A, the location-based information providing service may provide, through the location-based display, train service information related to the train station A, various types of culture content, or commercials, which are set by the service provider.

Accordingly, the location-based information providing service using the location-based display needs to provide targeted content based on people in an area where the location-based display is viewable. US20140087761A1 discloses personalized communication with a user who is physically located in a designated area for that communication. EP1102502A2 discloses a wireless telecommunication system that receives information from a wireless mobile unit and determines that the wireless mobile unit is within a designated region. KR20120057668A discloses a communication support system between clients in an offline shopping mall and method thereof to vary displayed product information according to a distance recognized by a client recognition module.

Information disclosed in this Background section was known to the inventors before achieving the inventive concept or is technical information acquired in the process of achieving the inventive concept.

US 2014/129336 A1 discloses a method and system for presenting targeted advertisement to users. The presence of the consumer(s) in proximity to the advertising space can be detected and information associated with the consumer(s) can be received or retrieved. Transaction information can then be transmitted to an auction environment where advertisers can evaluate the transaction information and make determinations as to whether to bid for the advertising space and how much to bid for the advertising space. The winning bidder in the auction may then select and/or transmit an advertisement for display at the advertising space that is tailored to the consumer. In this manner, an advertisement directed at an individual, a group, or a portion of a group may be displayed at the advertising space during a time in which the individual, group, or portion of the group can view the advertisement.

The above information is presented as background information only to assist with an understanding of the present disclosure.

### SUMMARY

Aspects of the present disclosure are to address at least the above-mentioned problems and/or disadvantages and to provide at least the advantages described below.

Accordingly, an aspect of the present disclosure is to provide a server according to independent claim 1, a method according to independent claim 7, and non-transitory computer-readable medium according to independent claim 13. Further advantageous aspects of the invention are set out in the dependent claims. The scope of the invention is defined by these claims.

Additional aspects will be set forth in part in the description which follows and, in part, will be apparent from the description, or may be learned by practice of the presented various embodiments.

In accordance with an aspect of the present disclosure, a server is provided. The server includes a first communication unit configured to communicate with at least one computing device and at least one display; a second communication unit configured to receive content database (DB) information by being connected to at least one external device; a memory configured to store a program for operating the server; and a processor configured to control operations of the server by using the program. The processor is further configured to receive, in real time, information about a first user and identification (ID) information of a zone from a computing device among the at least one computing device through the first communication unit as a check-in or a check-out of the computing device with respect to the zone is detected, obtain the content DB information from an external device among the at least one external device through the second communication unit by using the ID information of the zone, detect targeted content from the content DB information by using information about a user regarding the zone, and transmit the targeted content to a display provided in the zone through the first communication unit.

In accordance with another aspect of the present disclosure, a method of providing location-based information which is performed by a server is provided. The method includes receiving, in real time, information about a first user and ID information of a zone from a computing device as a check-in or a check-out of the computing device with respect to the zone is detected, obtaining content DB information by using the ID information of the zone, detecting targeted content from the content DB information by using information about a user regarding the zone, and transmitting the targeted content to a display provided in the zone such that the targeted content is provided through the display.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

FIG. 1 is a diagram of a system for providing location-based information, according to an embodiment of the present disclosure;
FIGS. 2 and 3 are flowcharts of a method of obtaining, by first through n-th computing devices, information about a user according to various embodiments of the present disclosure;
FIG. 4 illustrates an example of a term per a webpage detected by first through n-th computing devices according to an embodiment of the present disclosure;
FIG. 5 is a flowchart of a method of obtaining, by first through n-th computing devices, information about a user according to an embodiment of the present disclosure;
FIG. 6 is a diagram for describing a method of obtaining information about a user according to an embodiment of the present disclosure;
FIG. 7 illustrates an example of information about a user, which is received from first through n-th computing devices according to an embodiment of the present disclosure;
FIG. 8 illustrates an example of content database information based on a zone, obtained from a content database according to an embodiment of the present disclosure;
FIG. 9 illustrates an example about priority information of an interest keyword according to an embodiment of the present disclosure;
FIG. 10 illustrates an example of information about a user according to an embodiment of the present disclosure;
FIG. 11 illustrates an example of priority information of interest keywords according to an embodiment of the present disclosure;
FIGS. 12 and 13 are flowcharts of a method of providing location-based information according to various embodiments of the present disclosure;
FIG. 14 illustrates an example of information about a second user, which is received from a digital information display according to an embodiment of the present disclosure ;
FIG. 15 is a flowchart of a method of providing location-based information according to an embodiment of the present disclosure;
FIG. 16 is a diagram for describing a system for providing location-based information according to an embodiment of the present disclosure;
FIGS. 17 to 20 are flowcharts of a method of providing location-based information according to various embodiments of the present disclosure;
FIGS. 21A to 21C illustrate examples of a screen of targeted content provided through a digital information display according to various embodiments of the present disclosure;
FIGS. 22 to 24 are flowcharts of a method of providing location-based information according to other various embodiments of the present disclosure;
FIGS. 25 and 26 are block diagrams of a first computing device according to various embodiments of the present disclosure;
FIG. 27 is a block diagram of a server according to an embodiment of the present disclosure; and
FIG. 28 is a block diagram of a digital information display according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the invention which is defined by the appended claims. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

In the specification, when a region is "connected" to another region, the regions may not only be "directly connected", but may also be "electrically connected" via another device therebetween. Also, when a region "includes" an element, the region may further include another element instead of excluding the other element, otherwise differently stated.

As used herein, the term "and/or" includes any and all combinations of one or more of the associated listed items. Expressions such as "at least one of," when preceding a list of elements, modify the entire list of elements and do not modify the individual elements of the list.

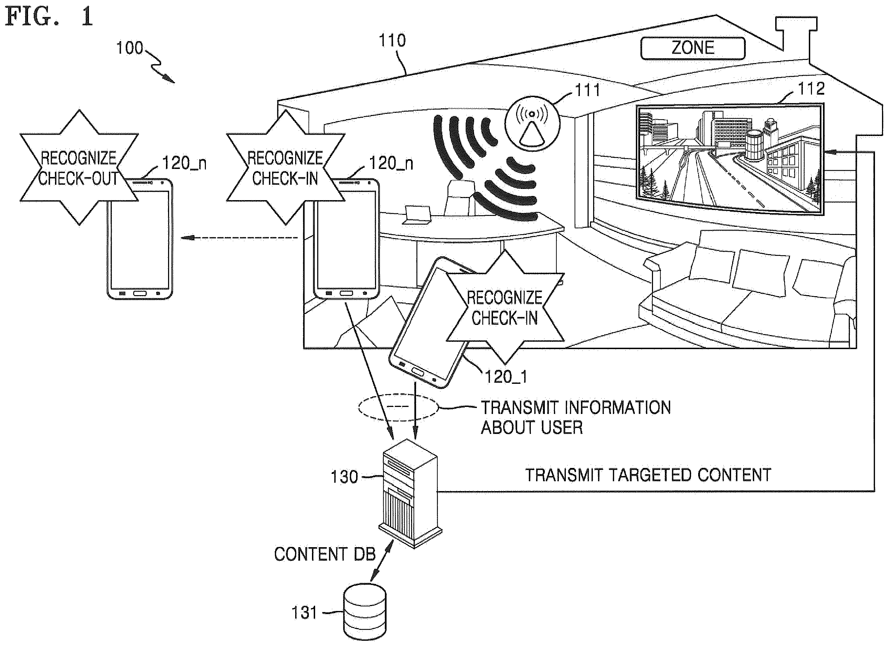

FIG. 1 is a diagram of a system for providing location-based information according to an embodiment.

Referring to FIG. 1, a system 100 may obtain information about a user based on check-in or check-out of first through n-th computing devices 120_1 through 120_n with respect to a zone 110, and provide targeted content by using the information about the user. The system 100 further includes a server 130 and a content DB 131.

The zone 110 may indicate a physical area based on a digital information display 112. The zone 110 may indicate a physical area in which a beacon signal generator 111 and the digital information display 112 are provided. For example, as shown in FIG. 1, a physical area of a zone (e.g., a restaurant A) in which the beacon signal generator 111 and the digital information display 112 are provided may be one zone. When the restaurant A includes a plurality of independent rooms and the beacon signal generator 111 and the digital information display 112 are provided in each room, one room may be one zone. When the beacon signal generator 111 and the digital information display 112 are provided in a platform of a train station B, the platform of the train station B may be one zone.

The digital information display 112 is a location-based display. The digital information display 112 may be a public display or a digital signage. The digital information display 112 may be a liquid crystal display (LCD), a light-emitting diode (LED) display, a transparent display, a triple view LCD, a plasma display, or a digital television (TV). However, in the present disclosure, the digital information display 112 is not limited thereto.

The check-in indicates that the at least one of the first through n-th computing devices 120_1 through 120_n approached (or entered) the zone 110. The first through n-th computing devices 120_1 through 120_n may recognize the check-in with respect to the zone 110 when a beacon signal generated by the beacon signal generator 111 provided in the zone 110 is received. The check-in may also be expressed as sign-in with respect the zone 110.

The check-out indicates that the at least one of the first through n-th computing devices 120_1 through 120_n moved away from (or exited) the zone 110. The first through n-th computing devices 120_1 through 120_n may recognize the check-out with respect to the zone 110 when the beacon signal generated by the beacon signal generator 111 provided in the zone 110 is not received for at least a certain period of time. The check-out may also be expressed as sign-out with respect to the zone 110.

The beacon signal generator 111 is a Bluetooth low energy (BLE)-based wireless communication apparatus. The beacon signal generator 111 may periodically generate a beacon signal receivable by, for example, the first through n-th computing devices 120_1 through 120_n, which are within a radial distance of 50 m to 70 m therefrom. A distance for receiving the beacon signal is not limited thereto. The beacon signal may include identification (ID) information of the zone 110, such as small office home office (SOHO) identifier.

The first through n-th computing devices 120_1 through 120_n may be a portable device capable of Bluetooth setting, a wearable device capable of Bluetooth setting, or a mobile device capable of Bluetooth setting, but are not limited thereto.

For example, when a WiFi-based communication apparatus (not shown) is provided in the zone 110 instead of the beacon signal generator 111, the first through n-th computing devices 120_1 through 120_n may include a device capable of WiFi setting. When a near field communication (NFC)-based communication apparatus (not shown) is provided in the zone 110 instead of the beacon signal generator 111, the first through n-th computing devices 120_1 through 120_n may include a device capable of NFC setting. When a Zigbee-based communication apparatus (not shown) is provided in the zone 110 instead of the beacon signal generator 111, the first through n-th computing devices 120-1 through 120_n may include a device capable of Zigbee setting.

When the beacon signal generator 111, the WiFi-based communication apparatus, the NFC-based communication apparatus, and the Zigbee-based communication apparatus are all provided in the zone 110, the first through n-th computing devices 120_1 through 120_n may recognize the check-in or check-out with respect to the zone 110 based on communication environments set therein.

When at least one of the beacon signal generator 111, the WiFi-based communication apparatus, the NFC-based communication apparatus, and the Zigbee-based communication apparatus is provided in the zone 110, the first through n-th computing devices 120_1 through 120_n may recognize the check-in or check-out with respect to the zone 1110 by setting communication environments according to a communication apparatus provided in the zone 110.

The beacon signal generator 111, the WiFi-based communication apparatus, the NFC-based communication apparatus, or the Zigbee-based communication apparatus provided in the zone 110 may be a short-range communication apparatus. Accordingly, the zone 110 may be an area where at least one short-range communication apparatus and a display are provided.

When the first through n-th computing devices 120_1 through 120_n are portable devices, for example, the first through n-th computing devices 120_1 through 120_n may include at least one of a smart phone, a laptop, a smart board, a tablet personal computer (PC), a handheld device, a handheld computer, a media player, an electronic book device, and a personal digital assistant (PDA), but are not limited thereto.

When the first through n-th computing devices 120_1 through 120_n are wearable devices, for example, the first through n-th computing devices 120_1 through 120_n may include at least one of smart glasses, a smart watch, smart bands (e.g., a smart waist band and a smart hair band), various smart accessories (e.g., a smart ring, a smart bracelet, a smart anklet, a smart hairpin, a smart clip, and a smart necklace, various smart body guards (e.g., a smart knee pad and a smart elbow pad), a smart shoe, a smart glove, smart clothes, a smart hat, a smart artificial leg, and a smart artificial arm, but are not limited thereto.

When the first through n-th computing devices 120_1 through 120_n are mobile devices, for example, the first through n-th computing devices 120_1 through 120_n include a machine to machine (M2M) or Internet of things (IoT)-based vehicle, and/or a vehicle navigation device, but are not limited thereto. When the first through n-th computing devices 120_1 through 120_n are IoT-based vehicles, the zone 110 may be a drive-in theater and the digital information display 112 may be a screen provided in the drive-in theater.

The information about the user may be obtained by each of the first through n-th computing devices 120_1 through 120_n. Each of the first through n-th computing devices 120_1 through 120_n may obtain the information about the user by performing anonymous user modeling on at least one piece of information related to the user, such as data based on a user activity of using the first through n-th computing devices 120_1 through 120_n, user profile information, health information of the user (e.g., a heart rate, a blood flow, a speed of breaths, and/or a temperature of skin), emotion information of the user (e.g., joy, sadness, fear, anger, fright, gratitude, and/or hatred), and schedule information of the user (e.g., a wedding, a meeting, and/or a gathering).

The user activity of using the first through n-th computing devices 120_1 through 120_n may include a search through a web browser provided in the first through n-th computing devices 120_1 through 120_n. The user activity may include a webpage view through the web browser provided in the first through n-th computing devices 120_1 through 120_n. The user activity may include a posting (e.g., writing and/or a photo) using a social network service (SNS) application provided in the first through n-th computing devices 120_1 through 120_n. The user activity may include a reply using the SNS application provided in the first through n-th computing devices 120_1 through 120_n.

The user activity may include sharing (e.g., retweet) using the SNS application provided in the first through n-th computing devices 120_1 through 120_n. The user activity may include posting an article of interest by using the SNS application provided in the first through n-th computing devices 120_1 through 120_n. The user activity may include a mention using the SNS application provided in the first through n-th computing devices 120_1 through 120_n. The user activity may include clicking a 'Like' option by using the SNS application provided in the first through n-th computing devices 120_1 through 120_n. However, the user activity is not limited thereto.

The user activity of using the first through n-th computing devices 120_1 through 120_n may be based on an interaction between the user and the first through n-th computing devices 120_1 through 120_n.

The user profile information may include at least one of a gender, an age, an interest, a point of interest (POI), a preferred POI, a preference, a hobby, a residence, a birth place, an occupation, and a company location, but is not limited thereto. For example, the user profile information may include at least one piece of information detected from social media (e.g., Facebook, Twitter, blog, You Tube, or Linkedin) profile information, personal information management software (PIMS) information, and/or life log information.

The social media profile information, the PIMS information, and/or the life log information may be received from an external device (e.g., a database (DB) or a server) connected to the first through n-th computing devices 120_1 through 120_n based on wired communication or wireless communication, but is not limited thereto.

The health information and the emotion information may be received from an external device (e.g., a wearable device) connected to the first through n-th computing devices 120_1 through 120_n based on wired communication or wireless communication, but is not limited thereto.

The anonymous user modeling may process the information related to the user, which is obtained by the first through n-th computing devices 120_1 through 120_n, such that the user is not traceable based on the information about the user. For example, when the information related to the user is obtained by monitoring operations of the first through n-th computing devices 120_1 through 120_n, the first through n-th computing devices 120_1 through 120_n may obtain information, from which information for identifying the user included in the information related to the user is excluded, as the information about the user, via the anonymous user modeling.

The information about the user obtained via the anonymous user modeling may include at least one of, for example, an age group, a gender, a periodical interest keyword, and a periodical dynamic tag cloud, but is not limited thereto.

The periodical dynamic tag cloud may be based on the periodical interest keyword. A dynamic tag cloud indicates a form of displaying tags corresponding to keywords in different display sizes based on interest levels. For example, according to the dynamic tag cloud, a tag corresponding to a keyword having a high interest level may be displayed larger than a tag corresponding to a keyword having a low interest level. Accordingly, the user may intuitively determine the keyword having the high interest level and the keyword having the low interest level based on the dynamic tag cloud.

The information about the user may be displayed in an image, such as an avatar. At this time, an initial image may be set by the user of the first through n-th computing devices 120_1 through 120_n. The initial image may be updated based on the user activity of using the first through n-th computing devices 120_1 through 120 n.

The information about the user may be differently referred to based on a point of time when the information about the user is obtained and a device that obtained the information about the user. For example, the information about the user obtained by each of the first through n-th computing devices 120_1 through 120_n before the check-in with respect to the zone 110 is recognized may be referred to as information about a first user. The information about the user, which is obtained by the digital information display 112, may be referred to as information about a second user. The information about the user obtained by each of the first through n-th computing devices 120_1 through 120_n from when the check-in is recognized to when the check-out is recognized may be referred to as information about a third user.

As described above, the information about the user in FIG. 1 may be referred to as the information about the first user.

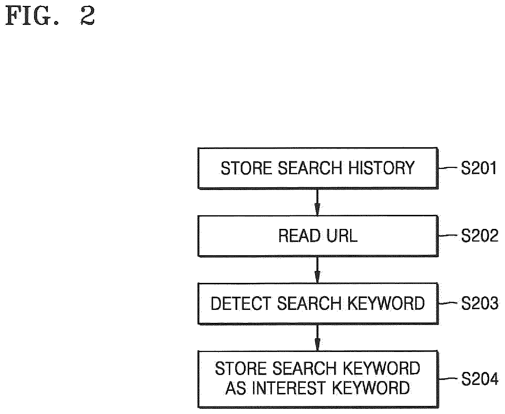

FIG. 2 is a flowchart of a method of obtaining, by a first through n-th computing devices, information about a user according to an embodiment of the present disclosure.

Referring to FIG. 2, the first through n-th computing devices 120_1 through 120_n obtain the information about the user via anonymous user modeling.

Referring to FIG. 2, the first through n-th computing devices 120_1 through 120_n detects a search keyword used by the user as the information about the user. For convenience of description, the method of FIG. 2 is described based on the first computing device 120_1. However, it should be understood that the method of FIG. 2 is also applicable to each of the second through n-th computing devices 120_2 through 120_n.

In operation S201, the first computing device 120_1 stores a search history when a search using a web browser provided in the first computing device 120_1 is performed.

In operation S202, the first computing device 120_1 reads a uniform resource locator (URL) of a search website from the stored search history.

In operation S203, the first computing device 120_1 detects a search engine used during the search by parsing a URL string of the search website. When the search engine is detected, the first computing device 120_1 detects a search keyword by finding a parameter corresponding to a search word from the search engine.

For example, when the URL string of the search website is "https://www.google.co.kr/webhp?sourceid=chrome-instant&ionl&espv= &ie=UTF-8#sourceid=chrome-psyapi2&ie=UT F-8&q=car", the first computing device 120_1 detects Google as the search engine by parsing the URL string. In Google, a parameter corresponding to a search word is "q". Thus, the first computing device 120_1 finds "q" from the URL string. After finding "q" from the URL string, the first computing device 120_1 obtains "q=car" and detects "car" as the search keyword.

In operation S204, the first computing device 120_1 stores the detected search keyword as an interest keyword. The stored interest keyword may be used as the information about the user according to one or more various embodiments of the present disclosure.

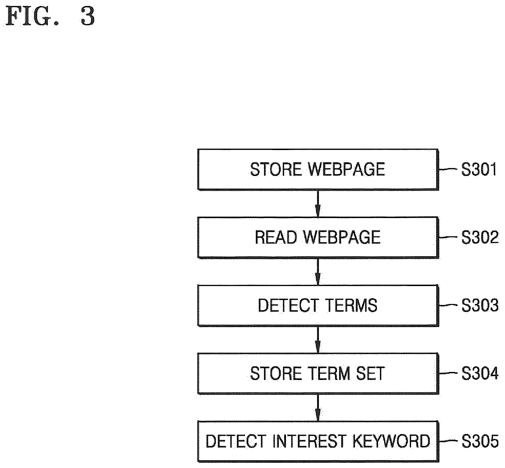

FIG. 3 is a flowchart of a method of obtaining, by the first through n-th computing devices, information about a user according to another embodiment of the present disclosure.

Referring to FIG. 3, the first through n-th computing devices 120_1 through 120_n may obtain the information about the user via anonymous user modeling. The first through n-th computing devices 120_1 through 120_n detect an interest keyword from a webpage. For convenience of description, the method of FIG. 3 is performed by the first computing device 120_1.

In operation S301, when a webpage is browsed by using a web browser provided in the first computing device 120_1, the first computing device 120_1 stores the webpage. The webpage may be a document.

In operation S302, the first computing device 120_1 reads the webpage.

In operation S303, the first computing device 120_1 performs text-parsing on the webpage. The first computing device 120_1 may perform the text-parsing via, for example, morpheme analysis using lucene library, but the text-parsing is not limited thereto. The first computing device 120_1 may detect all terms in the webpage via morpheme analysis. The term detected by the first computing device 120_1 is a smallest meaningful unit of language.

In operation S304, the first computing device 120_1 stores the term set by counting the terms. The first computing device 120_1 calculates a weight of each term by using counts of each term. The first computing device 120_1 may calculate the weight such that a high weight is assigned to the term having a high occurrence frequency.

The first computing device 120_1 may calculate the weight of each term by using a term frequency-inverse document frequency (TF-IDF) algorithm, but a method of calculating a weight of each term is not limited thereto. The TF-IDF algorithm is an algorithm of multiplying a TF and an IDF. The TF is a value indicating how often a term is shown in a document. The IDF is an inverse value of a document frequency. Thus, when the TF-IDF algorithm is used, the first computing device 120_1 may set a high weight to a term that frequently appears in a certain document but infrequently appears in all documents.

The first computing device 120_1 sets and stores the terms having the weights in a webpage unit. For example, when weights of N terms detected from a first webpage are calculated, the first computing device 120_1 may store the N terms as a term set.

In operation S305, the first computing device 120_1 may detect an interest keyword by using the term set stored in the webpage unit.

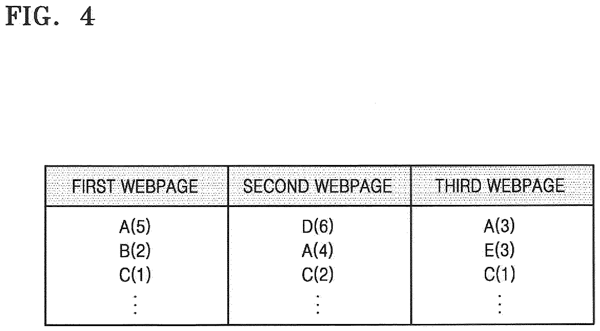

FIG. 4 illustrates an example of a term set in a webpage unit detected by the first through n-th computing devices according to an embodiment of the present disclosure. FIG. 4 is described based on the first computing, but it should be understood that FIG. 4 is also applicable to each of the second through n-th computing devices.

Referring to FIG. 4, when the term set of each webpage stored in the first computing device 120_1 includes A through E terms, and weights of the A through E term are as numbers in brackets, the first computing device 120_1 obtains a total weight per term by adding the weights of each of the A through E terms.

The total weight of the A term is 12 (5+4+3). The total weight of the B term is 2 (2+0+0). The total weight of the C term is 4 (1+2+1). The total weight of the D term is 6 (0+6+0). The total weight of the E term is 3 (0+0+3).

When a condition of detecting interest keywords, which is pre-set in the first computing device 120_1, is three terms having highest total weights, the first computing device 120_1 may detect the A term, the D term, and the C term, which have the top three highest total weights, as interest keywords. The interest keywords may be used as information about a user, according to one or more various embodiments of the present disclosure.

The condition pre-set to detect interest keywords is not limited thereto. For example, the condition may be N terms having highest total weights, wherein N is a natural number equal to or higher than 1. A weight calculated per term may have at least one decimal place.

The first computing device 120_1 may perform operation S305 of FIG. 3 at a point of time when information about a user is requested (e.g, when the check-in of the first computing device 120_1 with respect to the zone 110 is recognized), but an embodiment is not limited thereto. For example, the first computing device 120_1 may perform operation S305 whenever a term set is stored for one webpage.

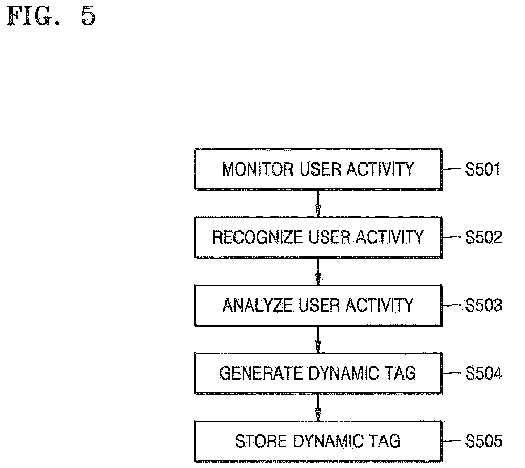

FIG. 5 is a flowchart of a method of obtaining, by the first through n-th computing devices, information about a user via anonymous user modeling according to an embodiment of the present disclosure.

Referring to FIG. 5, the first through n-th computing devices 120_1 through 120_n obtains a dynamic tag generated based on a user activity as the information about the user. The method of FIG. 5 is described based on the first computing device 120_1.

In operation S501, the first computing device 120_1 monitors a user activity based on the first computing device 120_1. The user activity has been described above with reference to FIG. 1

When the user activity based on the first computing device 120_1 is recognized in operation S502, the first computing device 120_1 analyzes the user activity in operation S503. When the user activity is based on an SNS application provided in the first computing device 120_1, the first computing device 120_1 may determine what the user activity is by using an application programming interface (API) of the SNS application.

When it is determined that the user activity is clicking 'Like' of content, the first computing device 120_1 performs morpheme analysis on the content. When terms are detected via the morpheme analysis, the first computing device 120_1 generates a dynamic tag by using the terms. For example, the first computing device 120_1 may generate the dynamic tag regarding the content by using N terms having highest occurrence frequencies. The dynamic tag may include the N terms, wherein N is a natural number equal to or higher than 1.

In operation S505, the first computing device 120_1 stores the dynamic tag. The first computing device 120_1 may generate and store the dynamic tag in a cloud form. The first computing device 120_1 may use the dynamic tag as the information about the user. The dynamic tag may be referred to as a dynamic keyword or a keyword.

The first through n-th computing devices 120_1 through 120_n may store at least one of an interest keyword (or a search word) based on the search of FIG. 2, an interest keyword based on the webpage of FIG. 3, and a dynamic tag based on the user activity of FIG. 5.

When all of the interest keywords (or the search words) based on the search of FIG. 2, the interest keyword based on the webpage of FIG. 3, and the dynamic tag based on the user activity of FIG. 5 are stored in the first through n-th computing devices 120_1 through 120_n, the first through n-th computing devices 120_1 through 120_n may independently store and manage the interest keyword based on the search, the interest keyword based on the webpage, and the dynamic tag.

The first through n-th computing devices 120_1 through 120_n may transmit the interest keywords and/or the dynamic tag simultaneously to a server 130 that is described later when check-in with respect to the zone 110 is recognized. The first through n-th computing devices 120_1 through 120_n may transmit the interest keywords and/or the dynamic tag to the server 130 after assigning ID information to each of the interest keywords and/or the dynamic tag.

The server 130 may determine whether information received from the first through n-th computing devices 120_1 through 120_n is the interest keyword based on the search, the interest keyword based on the webpage, or the dynamic tag based on the user activity based on the ID information.

When the interest keywords and the dynamic tag are stored in the first through n-th computing devices 120_1 through 120_n, and the check-in with respect to the zone 110 is recognized, the first through n-th computing devices 120_1 through 120_n may generate an integrated interest keyword by using the interest keywords and the dynamic tag. The first through n-th computing devices 120_1 through 120_n may transmit the integrated interest keyword to the server 130.

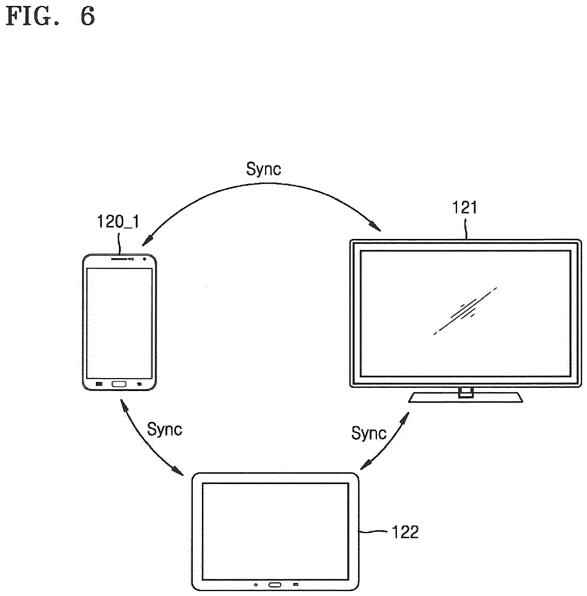

FIG. 6 is a diagram for describing a method of obtaining information about a user according to an embodiment of the present disclosure.

Referring to FIG. 6, information about a user, which is obtained by the first computing device 120_1, and information about a user, which is obtained by other devices 121 and 122, are integrated. The first computing device 120_1 and the devices 121 and 122 may use the same account. The devices 121 and 122 are multimedia devices, and may each be a digital TV or a tablet PC, but are not limited thereto.

When the first computing device 120_1 and the devices 121 and 122 are synchronized with each other, the first computing device 120_1 and the devices 121 and 122 may share the information about the user. By sharing the information about the user, the first computing device 120_1 and the devices 121 and 122 may update the information about the user.

The first computing device 120_1 and the devices 121 and 122 may be used to continuously obtain the information about the user. For example, when the first computing device 120_1 is a smart phone, the device 121 is a digital TV, and the device 122 is a tablet PC, and when the user stops using the smart phone and watches a TV program via the digital TV while drawing via the tablet PC, the smart phone may share information about the user obtained by the digital TV and information about the user obtained by the tablet PC. The smart phone may generate integrated information about the user by integrating information about the user obtained by the smart phone, the information about the user obtained by the digital TV, and the information about the user obtained by the tablet PC.

When the information about the user is edited by the first computing device 120_1 and the edited information about the user is shared with the devices 121 and 122, the information about the user obtained by the devices 121 and 122 may be updated by the edited information about the user.

The content DB 131 of FIG. 1 may store content DB information about content providable based on the zone 110, but information stored in the content DB 131 is not limited thereto. For example, the content DB 131 may store content DB information about content providable based not only on the zone 110, but also on another zone.

The content DB 131 may be configured to manage the content DB information based on ID information of each zone. The content DB information may include content, ID information of content, tag information about content, and rank information of content, but is not limited thereto. The content DB 131 may provide the content DB information providable based on the zone 110 to the server 130 according to a request of the server 130.

The content may include a menu, a commercial, and/or guide information based on the zone 110, but is not limited thereto. The commercial and the guide information may be directly related to the zone 110 or may not be directly related to the zone 110. For example, when the commercial and the guide information about a product sold in the zone 110 are content directly related to the zone 110. When the zone 110 is a Korean restaurant and the commercial is about an S company mobile phone, the commercial is content that is not directly related to the zone 110.

The server 130 may provide location-based information according to one or more various embodiments of the present disclosure. The server 130 may obtain the content DB information based on the zone 110 from the content DB 131 by using the ID information of the zone 110 received from the first through n-th computing devices 120_1 through 120_n as the check-in is recognized.

The server 130 may detect targeted content by using the information about the user received from the first through n-th computing devices 120_1 through 120_n as the check-in is recognized, and the content DB information based on the zone 110 obtained from the content DB 131.

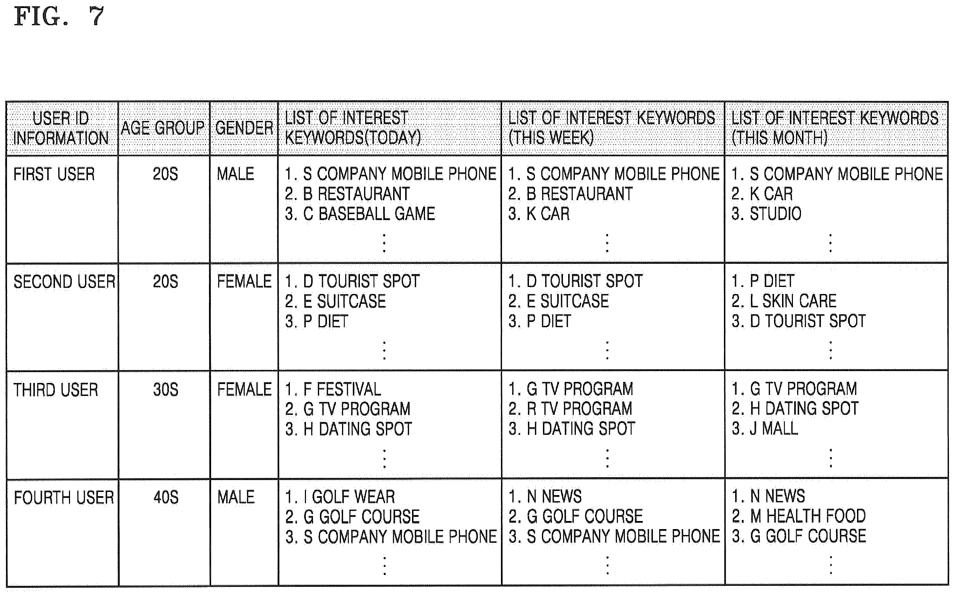

FIG. 7 illustrates an example of information about a user, which is received from the first through n-th computing devices according to an embodiment of the present disclosure.

The information about the user shown in FIG. 7 includes lists of interest keywords of first through fourth users, but is not limited thereto. The interest keywords of FIG. 7 may be based on the information about the user described above with reference to FIG. 2, 3, and/or 5.

Referring to FIG. 7, the first user is a male in 20s. Today's interest keywords of the first user are in an order of an S company mobile phone, a B restaurant, and a C baseball game. This week's interest keywords of the first user are in an order of S company mobile phone, the B restaurant, and a K car. This month's interest keywords of the first user are in an order of the S company mobile phone, the K car, and a studio.

The second user is a female in 20s. Today's interest keywords of the second user are in an order of a D tourist spot, an E suitcase, and a P diet. This week's interest keywords of the second user are in an order of the D tourist spot, the E suitcase, and the P diet. This month's interest keywords of the second user are in an order of the P diet, L skin care, and the D tourist spot.

The third user is a female in 30s. Today's interest keywords of the third user are in an order of an F festival, a G TV program, and an H dating spot. This week's interest keywords of the third user are in an order of the G TV program, an R TV program, and the H dating spot. This month's interest keywords of the third user are in an order of the G TV program, the H dating spot, and a J mall.

The fourth user is a male in 40s. Today's interest keywords of the fourth user are in an order of an I golf wear, a G golf course, and the S company mobile phone. This week's interest keywords of the fourth user are in an order of an N news, the G golf course, and the S company mobile phone. This month's interest keywords of the fourth user are in an order of the N new, M health food, and the G golf course.

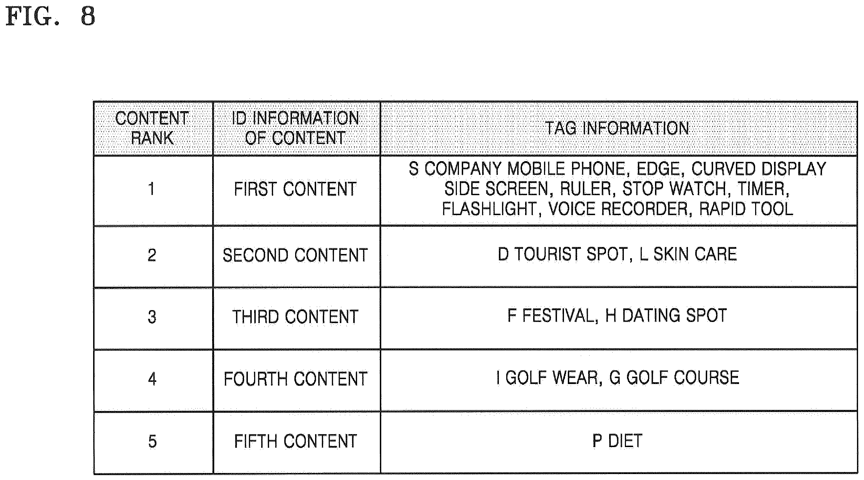

FIG. 8 illustrates an example of content DB information based on a zone obtained from a content database according to an embodiment of the present disclosure.

Referring to FIG. 8, content DB information based on the zone 110 includes rank information of content, ID information of content, and tag information assigned to content. Content providable information based on the zone 110 is first content through fifth content, but is not limited thereto.

When information about a user received from the first through n-th computing devices 120_1 through 120_n is as shown in FIG. 7 and content DB information based on the zone 110, which is obtained from the content DB 131, is as shown in FIG. 8, the server 130 may analyze interest keywords of people in the zone 110 by using recent information (e.g., a list of today's interest keywords) from the information about the user.

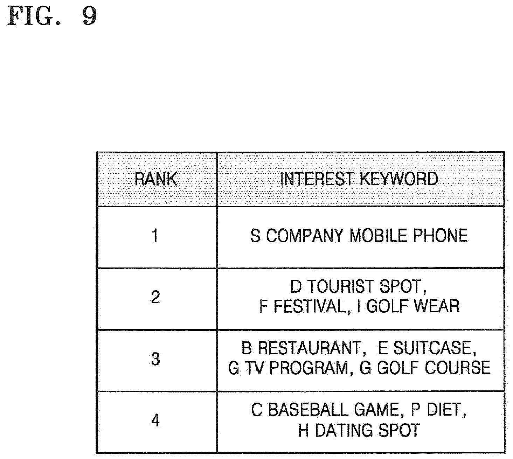

FIG. 9 illustrates an example about priority information of an interest keyword according to an embodiment of the present disclosure.

Referring to FIG. 9, the server 130 may determine ranks of interest keywords based on results of analyzing recent information of people in the zone 110 shown in FIG. 7, for example, a list of today's interest keywords. Ranks of the interest keywords in FIG. 9 are determined based on repetition, a rank, and a frequency of today's interest keywords of FIG. 7.

The determining of the ranks of the interest keywords by the server 130 is not limited to FIG. 9. For example, the server 130 may determine the ranks of the interest keywords based on at least one of the list of today's interest keywords, the list of this week's interest keywords, and the list of this month's interest keywords of FIG. 7.

When the ranks of the interest keywords are determined as shown in FIG. 9 by the server 130, the server 130 may detect targeted content from the content DB information shown in FIG. 8 by using the S company mobile phone in a first rank as a keyword. Referring to FIG. 8, since the tag information of the first content includes the S company mobile phone, the server 130 may detect the first content as the targeted content.

When the server 130 transmits the targeted content to the digital information display 112, the server 130 may detect ID information of the digital information display 112 by using the ID information of the zone 110.

For example, the server 130 may pre-store a mapping table of the zone 110 and the digital information display 112, and detect the ID information of the digital information display 112 by referring to the mapping table. The mapping table may include a table in which the ID information of the zone 110 and the ID information of the digital information display 112 are mapped to each other.

The server 130 may use the ID information of the digital information display 112 to set a communication channel between the digital information display 112 and the server 130. The server 130 may transmit the targeted content to the digital information display 112 by using the communication channel. Accordingly, the first through fourth users currently in the zone 110 may view the first content through the digital information display 112.

When a plurality of pieces of content are continuously providable, the server 130 may detect targeted content from the content DB information of FIG. 8 by using the interest keywords in second ranks of FIG. 9, such as the D tourist spot, the F festival, and the I golf wear.

The server 130 detects the second content through the fourth content from the content DB information as the targeted content, based on the interest keywords in the second ranks.

When a plurality of pieces of the targeted content are detected, the server 130 may transmit the pieces of targeted content to the digital information display 112 in an order set in the content DB information of FIG. 8. In other words, the server 130 may transmit the second content, the third content, and the fourth content in the stated order to the digital information display 112. Accordingly, the first through fourth users in the zone 110 may sequentially view the second content through the fourth content through the digital information display 112.

After sequentially providing the second content through fourth content, the server 130 may detect next targeted content by referring to the rank information of the interest keywords of FIG. 9. In other words, the server 130 may detect the next targeted content from the content DB information of FIG. 8 by using interest keywords in third priorities, such as the B restaurant, the E suitcase, the G TV program, and the G golf course.

Referring back to FIG. 8, the content DB information does not include content that includes the B restaurant and the E suitcase as tag information. The content DB information includes the third content and the fourth content, which include the G TV program and the G golf course as the tag information.

Accordingly, the server 130 may sequentially transmit the third content and the fourth content to the digital information display 112.

However, when content that has been already provided once is limited from being provided again, the server 130 may not transmit the third content and the fourth content to the digital information display 112, and may detect next targeted content.

The interest keywords in fourth ranks of FIG. 9 are the C baseball game, the P diet, and the H dating spot. The server 130 may detect targeted content from the content DB information of FIG. 8 by using the interest keywords in the fourth ranks.

Referring to FIG. 8, the content DB information does not include content that includes the C baseball game as tag information. The content DB information includes the third content including the H dating spot as the tag information and the fifth content including the P diet as the tag information. Accordingly, the server 130 may detect the third content and the fifth content as the next targeted content.

As described above, when content that has been already provided once is limited from being provided again, the server 130 may not transmit the third content to the digital information display 112, and may transmit the fifth content to the digital information display 112.

Accordingly, the first through fourth users may view the fifth content through the digital information display 112.

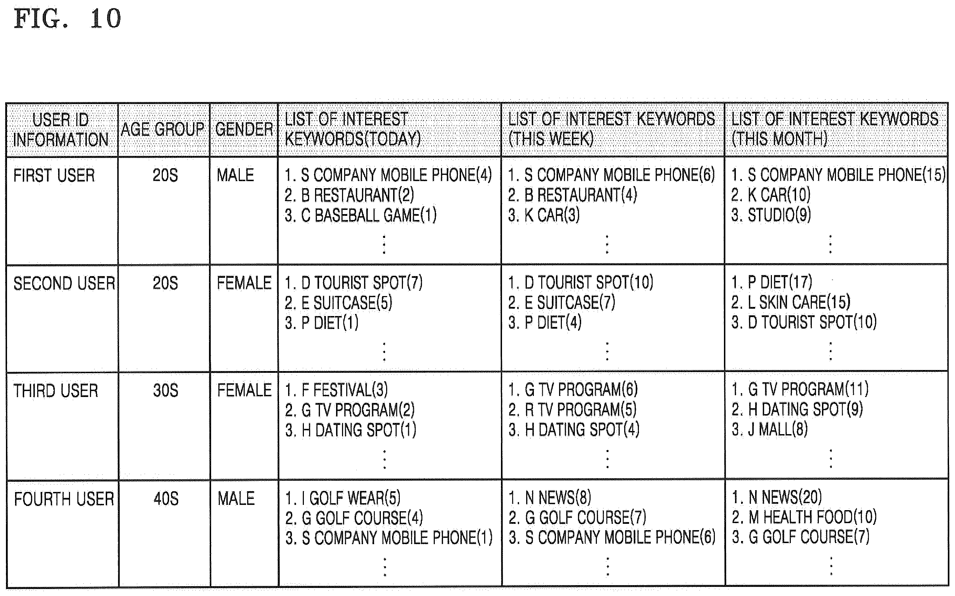

FIG. 10 illustrates an example of information about a user according to an embodiment of the present disclosure.

Referring to FIG. 10, the information about the user may include interest keywords and weights of the interest keywords.

When the information about the user includes the interest keywords and the weights of the interest keywords as shown in FIG. 10, the server 130 may determine ranks of the interest keywords based on the weights.

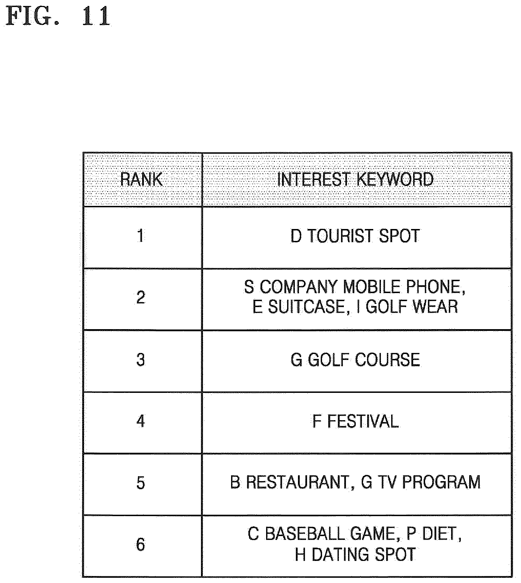

FIG. 11 illustrates an example of rank information of interest keywords according to an embodiment of the present disclosure. Ranks of the interest keywords shown in FIG. 11 are determined based on weights of today's interest keywords of FIG. 10.

Referring to FIG. 11, when the ranks of the interest keywords included in information about a user are determined, the server 130 may detect targeted content by using the rank information of FIG. 11 and the content DB information of FIG. 8 as described above with reference to FIG. 9.

The determining of the ranks of the interest keywords is not limited to FIG. 11. For example, the server 130 may add the weights of the interest keywords included in at least two of the list of the today's interest keywords, the list of this week's interest keywords, and the list of this month's interest keywords, which are included in the information about the user of FIG. 10, and determine the ranks of the interest keywords by using the added weights.

An order of providing the first content through fifth content of FIG. 8 may be set by a service provider (or a content provider) based on the zone 110, but may be changed as described above based on the information about the first through fourth users in the zone 110.

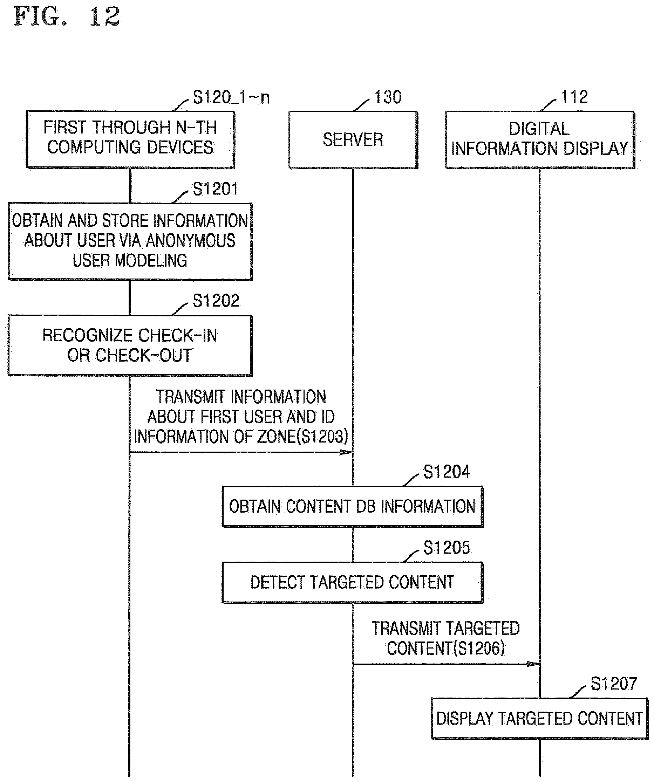

FIG. 12 is a flowchart of a method of providing location-based information according to an embodiment of the present disclosure.

Referring to FIG. 12, the server 130 may provide targeted content by using information about a user received from the first through n-th computing devices 120_1 through 120_n as check-in or check-out of the first through n-th computing devices 120_1 through 120_n is recognized.

In operation S1201, the first through n-th computing devices 120_1 through 120_n may obtain and store the information about the user via anonymous user modeling as described above with reference to FIG. 2, 3, or 5.

When the check-in or check-out of at least one of the first through n-th computing devices 120_1 through 120_n is recognized in operation S1202, the at least one of the first through n-th computing devices 120_1 through 120_n transmits information about a first user and ID information of the zone 110 to the server 130 in operation S1203. At this time, the at least one of the first through n-th computing devices 120_1 through 120_n may also transmit flag information.

The flag information may indicate whether the information about the first user and the ID information of the zone 110 are transmitted based on the check-in or the check-out. The flag information may be represented in binary information, but is not limited thereto. For example, when the flag information is 0, the information about the first user and the ID information of the zone 110 are transmitted according to the recognition of the check-in, and when the flag information is 1, the information about the first user and the ID information of the zone 110 are transmitted according to the recognition of the check-out.

For convenience of description, at least one device of which check-in or check-out with respect to the zone 110 is recognized from among the first through n-th computing devices 120_1 through 120_n is assumed to be the first computing device 120_1. However, it should be understood that the following descriptions are also applicable to any one of the second through n-th computing devices 120_2 through 120_n.

When the information about the first user and the ID information of the zone 110 are received in operation S1203, the server 130 obtains content DB information about the zone 110 from the content DB 131 by using the ID information of the zone 110 in operation S1204.

When the information about the first user and the ID information of the zone 110 are transmitted in operation S1203 as the check-in of the first computing device 120_1 with respect to the zone 110 is recognized, the server 130 detects targeted content from the content DB information regarding the zone 110 by using information about a user regarding the zone 110, in operation S1205.

At this time, the information about the user regarding the zone 110 includes the information about the first user. For example, when a user of the first computing device 120_1 corresponds to the second user of FIG. 7 in operation S1203, the information about the user may include information about the second user.

The server 130 may detect the targeted content based on one of the embodiments of the present disclosure described above with reference to FIGS. 7 through 11, but an embodiment is not limited thereto.

When the information about the first user and the ID information of the zone 110 are transmitted in operation S1203 as the check-out of the first computing device 120_1 with respect to the zone 110 is recognized, the server 130 detects the targeted content from the content DB information regarding the zone 110 by using information about a user regarding the zone 110, in operation S1205.

At this time, the information about the user regarding the zone 110 does not include the information about the first user. For example, when the user of the first computing device 120_1 corresponds to the second user of FIG. 7, the information about the user may not include information about the second user.

When the targeted content is detected, the server 130 transmits the targeted content to the digital information display 112 in operation S1206. The server 130 detects ID information of the digital information display 112 by using the ID information of the zone 110. The ID information of the digital information display 112 may be detected from a mapping table stored in the server 130 as described above, but an embodiment is not limited thereto.

The server 130 sets a communication channel with the digital information display 112 by using the ID information of the digital information display 112. The server 130 transmits the targeted content to the digital information display 112 by using the communication channel.

In operation S1207, the digital information display 112 displays the targeted content.

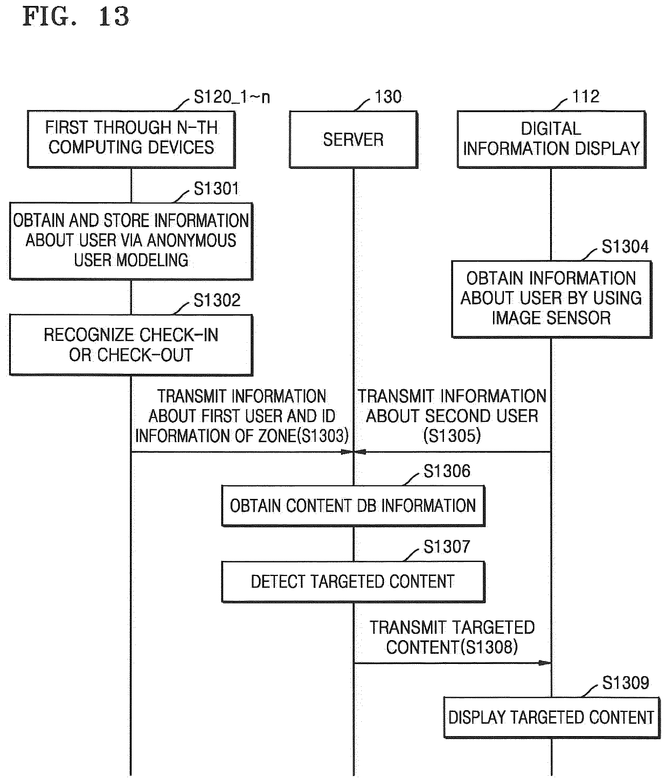

FIG. 13 is a flowchart of a method of providing location-based information according to various embodiments of the present disclosure.

Referring to FIG. 13, targeted content is detected by using information about a user, which is received from the first through n-th computing devices 120_1 through 120_n, and information about a user, which is received from the digital information display 112. Based on the method of FIG. 13, a connection relationship between the server 130 and the digital information display 112 of FIG. 1 may be bidirectional communication.

Since operations S1301 through S1303, S1308, and S1309 of FIG. 13 are respectively similar to operations S1201 through S1203, S1206, and S1207 of FIG. 12, details thereof are not provided again.

In operation S1304, the digital information display 112 obtains information about a user by using an image sensor (e.g., a camera) included in the digital information display 112. The information about the user obtained by the digital information display 112 may include an age group, a gender, a distance (i.e., a distance between the digital information display 112 and the user), and/or an exposed time, but is not limited thereto.

The digital information display 112 may periodically obtain the information about the user by using the image sensor, but an embodiment is not limited thereto. For example, the digital information display 112 may obtain the information about the user by using the image sensor whenever entry or exit of a user is detected by a local area communication apparatus (e.g., an NFC apparatus) or an IoT sensor provided at an entrance of the zone 110.

In operation S1305, the digital information display 112 transmits the information about the user (information about a second user) to the server 130. At this time, the digital information display 112 may also transmit the ID information of the zone 110.

The server 130 may obtain content DB information regarding the zone 110 from the content DB 131 by using the ID information of the zone 110, which is received from the first through n-th computing devices 120_1 through 120_n, and the ID information of the zone 110, which is received from the digital information display 112.

For example, the server 130 compares the ID information of the zone 110, which is received from the first through n th computing devices 120_1 through 120_n, and the ID information of the zone 110, which is received from the digital information display 112.

When the ID information of the zone 110, which is received from the first through n-th computing devices 120_1 through 120_n, and the ID information of the zone 110, which is received from the digital information display 112, do not match, the server 130 may stop providing a service or request the first through n-th computing devices 120_1 through 120_n and the digital information display 112 to retransmit the ID information of the zone 110.

When the ID information of the zone 110, which is received from the first through n-th computing devices 120_1 through 120_n, and the ID information of the zone 110, which is received from the digital information display 112, match each other, in operation S1306, the server 130 obtains the content DB information from the content DB 131 by using the ID information of the zone 110.

In operation S1307, the server 130 detects the targeted content from the content DB information regarding the zone 110 by using the information about the first user and the information about the second user.

The server 130 may use information in which the information about the first user and the information about the second user are combined.

For example, when the information about the first user is as shown in FIG. 7, and the information about the second user includes an age group, a gender, a distance, and an exposed time, the server 130 may detect an age distribution and a gender distribution, and detect the targeted content from the content DB information regarding the zone 110 based on the age distribution and the gender distribution.

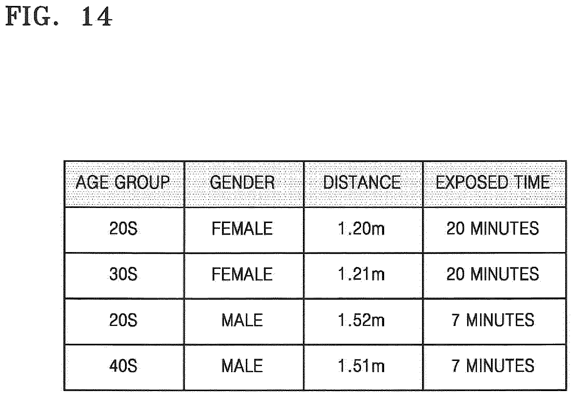

FIG. 14 illustrates an example of information about a second user, which is received from a digital information display according to an embodiment of the present disclosure.

Referring to FIG. 14, the information about the second user includes information about an age group, information about a gender, information about a distance, and information about an exposed time. When the information about the second user is as shown in FIG. 14, the server 130 may obtain an age distribution in which 20s is 50%, 30s is 25%, and 40s is 25%. The server 130 may obtain a gender distribution in which a female is 50% and a male is 50%.

The server 130 may detect a female in 20s and a male in 20s as search keywords in the same rank according to the age distribution and the gender distribution. In order to determine a priority from among the female in 20s and the male in 20s, the server 130 may check the information about the distance included in the information about the second user. Since a distance between the female in 20s and the digital information display 112 is shorter than a distance between the male in 20s and the digital information display 112, the server 130 may determine the female in 20s as a search keyword having a higher priority than the male in 20s.

According to an embodiment of the present disclosure, a basis of determining the search keyword by the server 130 is not limited thereto. For example, since the distance between the female in 20s and the digital information display 112 is shorter than the distance between the male in 20s and the digital information display 112, the server 130 may determine the male in 20s as a search keyword having a higher priority than the female in 20s.

After determining the female in 20s as the search keyword, the server 130 may detect targeted content from the content DB information regarding the zone 110 by using the female in 20s as the search keyword in operation S1307. In operation S1308, the server 130 transmits the targeted content to the digital information display 112.

The server 130 may determine the male in 20s as a next search keyword, and detect targeted content from the content DB information regarding the zone 110.

Upon detecting a female in 30s, a male in 30s, a female in 40s, and a male in 40s as search keywords in the same rank based on FIG. 14, the server 130 may check distances in FIG. 14. Since the distance between the female in 30s and the digital information display 112 is shorter than the distance between the male in 40s and the digital information display 112, the server 130 may determine the female in 30s as a next search keyword.

The server 130 may detect targeted content from the content DB information regarding the zone 110 by using the next search keyword, i.e., the female in 30s.

The server 130 may determine one of the male in 30s, the female in 40s, and the male in 40s as a next search keyword. Since the information about the first user and the information about the second user do not include information about the male in 30s and the female in 40s, the server 130 may not use the male in 30s and the female in 40s as search keywords. Accordingly, the server 130 may determine the male in 40s as the next search keywords.

The server 130 may detect targeted content from the content DB information regarding the zone 110 by using the next search keyword of the male in 40s.

A method of generating, by the server 130, a search keyword based on the information about the first user and the information about the second user is not limited thereto. For example, the server 130 may detect some of the information about the first user by using the information about the second user.

In other words, when the information about the second user is as shown in FIG. 14, and the information about the first user is as shown in FIG. 7, the server 130 may use the female in 20s and the female in 30s, who have exposed times of 20 minutes to the digital information display 112 and have close distances to the digital information display 112, as search keywords. The server 130 may detect lists of interest keywords of the second user and the third user from the information about the first user by using the females in 20s and 30s.

The server 130 may determine the search keywords by using the lists of interest keywords of the second user and the third user. The server 130 may detect targeted content from the content DB information regarding the zone 110 by using the search keywords.

After transmitting the targeted content to the digital information display 112, the server 130 may use the male in 20s and the male in 40s, who have exposed times of 7 minutes as search keywords. The server 130 may detect lists of interest keywords of the first user and the fourth user from the information about the first user, by using the males in 20s and 40s.

The server 130 may determine search keywords by using the lists of interest keywords of the first user and the fourth user. The server 130 may detect targeted content from the content DB information regarding the zone 110 by using the search keywords.

However, combining of the information about the first user and the information about the second user, which is performed by the server 130 to detect targeted content, is not limited thereto.

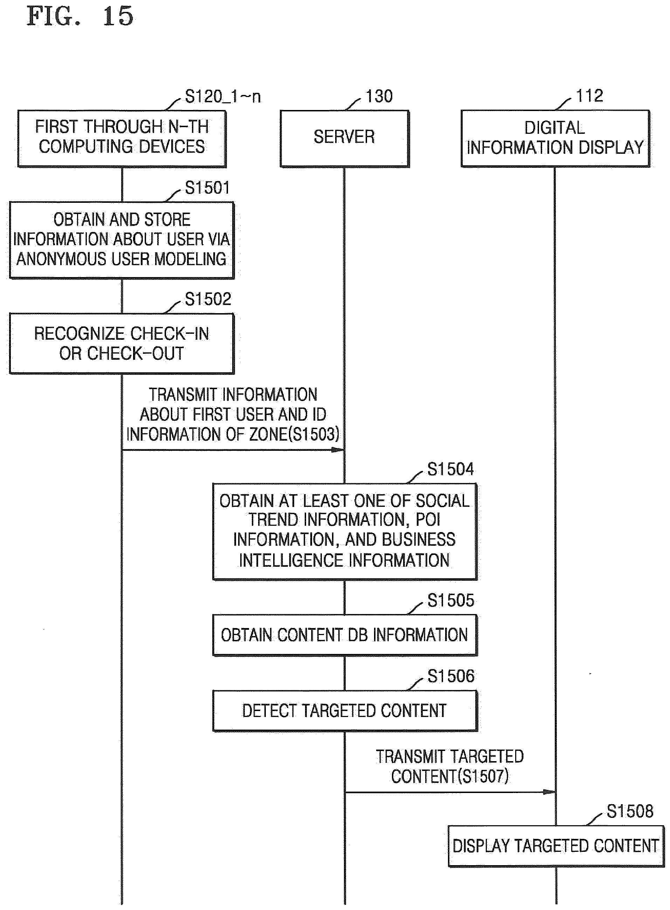

FIG. 15 is a flowchart of a method of providing location-based information according to an embodiment of the present disclosure.

Referring to FIG. 15, the method according to an embodiment may provide targeted content by using social trend information, POI information, business intelligence information, and information about a user regarding the zone 110.

Since operations S1501 through 1503, and S1505 through S1508 of FIG. 15 respectively correspond to operations S1201 through S1203 and S1204 through S1207 of FIG. 12, details thereof are not provided again.

In operation S1504, the server 130 may obtain at least one of the social trend information (e.g., a famous restaurant) regarding the zone 110, the POI information (e.g., a place related and adjacent to the zone 110) regarding the zone 110, and the business intelligence information (e.g., a popular menu in the zone 110) regarding the zone 110 by using the ID information of the zone 110.

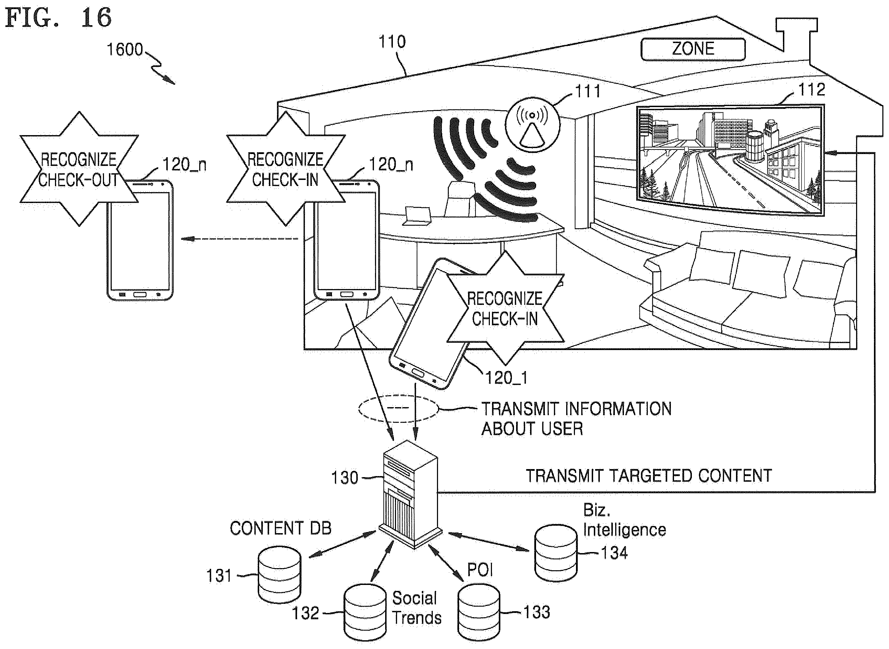

FIG. 16 is a diagram for describing a system for providing location-based information according to an embodiment of the present disclosure.

Referring to FIG. 16, in a system 1660, a server 130 may obtain the social trend information regarding a zone 110 from a social trend DB 132 or a SNS server (not shown). Accordingly, the system 1600 may provide the location-based information by further considering the social trend information, the POI information, and the business intelligence information of FIG. 15.

The social trend DB 132 or the SNS server may store and manage social trend information regarding a plurality of zones. The server 130 may obtain the social trend information regarding the zone 110 from the social trend DB 132 or the SNS server by using the ID information of the zone 110. The social trend information may not be specified to the zone 110. In other words, the social trend information may be applied regardless of the zone 110.

The server 130 may obtain the POI information regarding the zone 110 from a POI information DB 133 of FIG. 16 or a POI information providing server. The POI information DB 133 or the POI information providing server may store and manage POI information based on a plurality of zones. The server 130 may obtain the POI information regarding the zone 110 from the POI information DB 133 or the POI information providing server by using the ID information of the zone 110.

The business intelligence information regarding the zone 110 may include information collected based on the zone 110 or information generated based on the collected information. The server 130 may obtain the business intelligence information regarding the zone 110 from a business intelligence information DB 134 of FIG. 16 or a business intelligence information providing server. The business intelligence information DB 134 or the business intelligence information providing server may collect and manage business intelligence information of each zone.

Meanwhile, in operation S1505, the server 130 may obtain content DB information regarding the zone 110 from the content DB 131 by using the ID information of the zone 110.

In operation S1506, the server 130 may detect targeted content from the content DB information regarding the zone 110 by using at least one of the social trend information, the POI information, and the business intelligence information regarding the zone 110, which are obtained in operation S1504, and the information about the first user.

For example, when the zone 110 is a Korean restaurant, the social trend information is a famous restaurant and a travel, the POI information is a dessert specialized store, the business intelligence information is a most popular course, and the information about the first user is as shown in FIG. 7, the server 110 may detect the B restaurant and the D tourist spot as search keywords based on similarity between such information.

Since the B restaurant is ranked second in the list of today's interest keywords of the first user and the D tourist spot is ranked first in the list of today's interest keywords of the second user, the server 130 may determine the D tourist spot as a final search keyword based on rank. The server 130 may detect the second content as the targeted content from the content DB information of FIG. 8 by using the D tourist spot as the search keyword.

However, the detecting, by the server 130, of the targeted content of operation S1506 is not limited thereto.

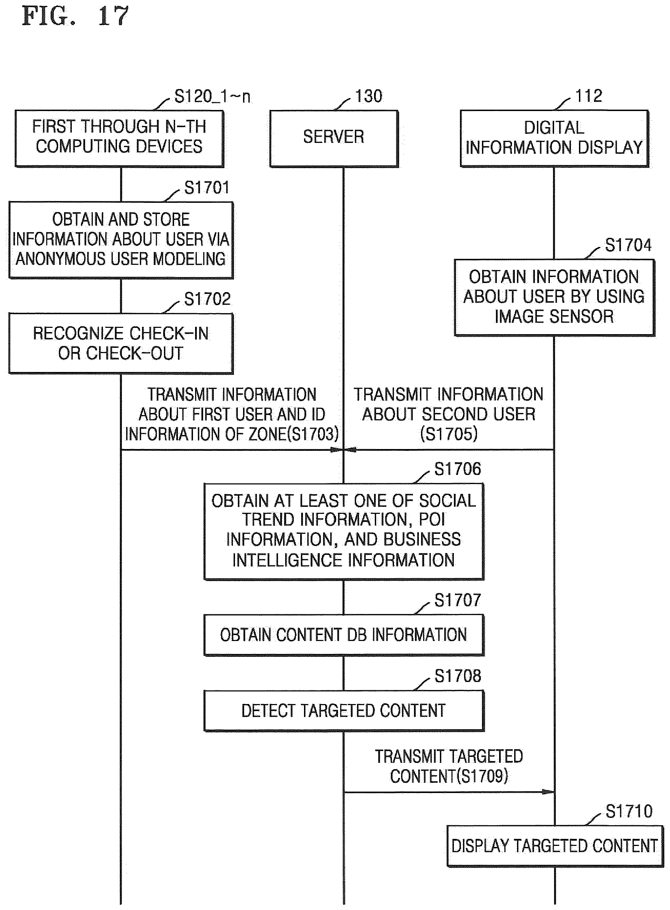

FIG. 17 is a flowchart of a method of providing location-based information according to an embodiment of the present disclosure.

Referring to FIG. 17, the method may detect targeted content by using the information about the first user, the information about the second user, and at least one of the social trend information, the POI information, and the business intelligence information regarding the zone 110.

Since operations S1701 through S1703, S1707, S1709, and S1710 of FIG. 17 respectively correspond to operations S1501 through S1503, S1505, S1507, and S1508 of FIG. 15, operations S1704 and S1705 of FIG. 17 respectively correspond to operations S1304 and S1305 of FIG. 13, and operation S1706 of FIG. 17 corresponds to operations S1504 of FIG. 15, details thereof are not provided again.

In operation S1708, the server 130 detects the search keyword by using the information about the first user, the information about the second user, and at least one of the social trend information, the POI information, and the business intelligence information regarding the zone 110. The server 130 may detect targeted content from the content DB information regarding the zone 110 by using the search keyword.

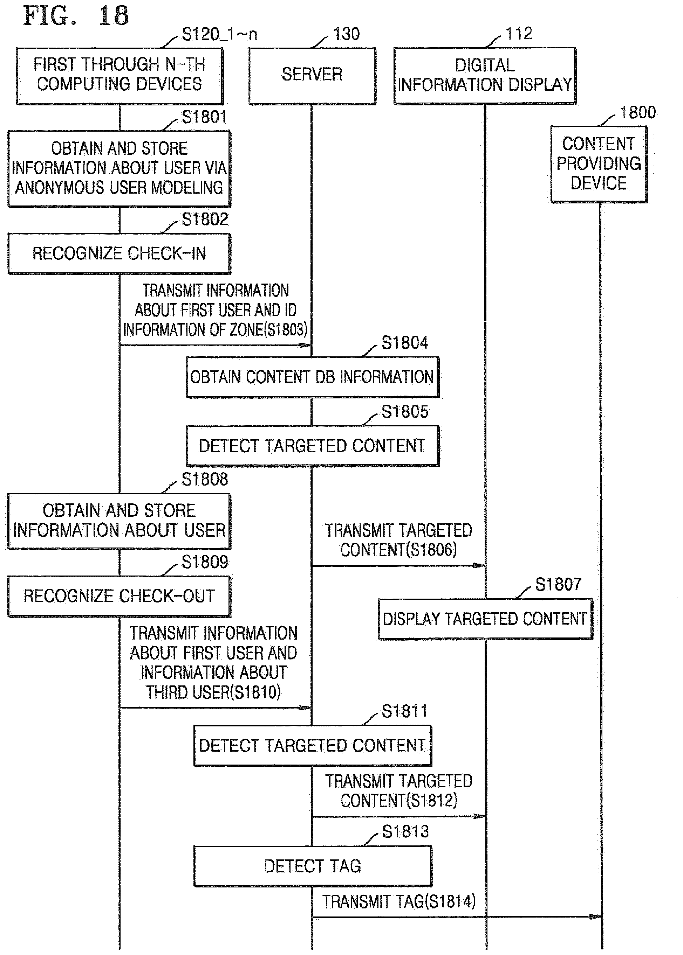

Referring to FIGS. 12, 13, 15, and 17, a process of recognizing the check-in or check-out of the first through n-th computing devices 120_1 through 120_n with respect to the zone 110 is described in one operation. However, the methods of FIGS. 12, 13, 15, and 17 may be changed such that a process of recognizing the check-in and a process of recognizing the check-out are independently performed as will be described below with reference to FIG. 18.

FIG. 18 is a flowchart of a method of providing location-based information according to an embodiment of the present disclosure.

Referring to FIG. 18, the method may provide targeted content to the digital information display 112 provided in the zone 110, while providing feedback information about the targeted content to a content providing device 1800.

Since operations S1801 through S1807 of FIG. 18 respectively correspond to operations S1201 through S1207 of FIG. 12, details thereof are not provided again.

After the check-in, the first through n-th computing devices 120_1 through 120_n obtain and store information about a user via anonymous user modeling that is performed by the first through n-th computing devices 120_1 through 120_n, in operation S1808. Operation S1808 may be performed in the similar manner as operation S1201 described above.

When the check-out with respect to the zone 110 is recognized by the first computing device 120_1 from among the first through n-th computing devices 120_1 through 120_n in operation S1809, the first computing device 120_1 may transmit the information about the first user and the information about the third user to the server 130 in operation S1810. For convenience of description, a device that recognized the check-out with respect to the zone 110 is assumed to be the first computing device 120_1, but it should be construed that any one of the first through n-th computing devices 120_1 through 120_n may recognize the check-out in operation S1809.

In operation S1810, the first computing device 120_1 may also transmit the ID information of the zone 110. The first computing device 120_1 may transmit flag information indicating the recognizing of the check-in to the server 130, in operation S1803. In operation S1810, the first computing device 120_1 may transmit flag information indicating the recognizing of the check-out to the server 130.

In operation S1811, the server 130 may detect targeted content while considering the information about the first user. In operation S1812, the server 130 may transmit the targeted content to the digital information display 112.

In operation S1813, the server 130 may detect a tag based on the information about the third user. The tag may be detected by using the method of FIGS. 2, 3, or 5. The tag may correspond to the interest keyword described above with reference to FIGS. 2, 3, or 5.

In operation S1814, the server 130 may transmit the tag to the content providing device 1800. Accordingly, the server 130 may pre-obtain information about the content providing device 1800 that provided the targeted content to the digital information display 112. For example, when the server 130 detects the targeted content, the server 130 may obtain the information about the content providing device 1800 that provided the targeted content.

The server 130 may obtain the information about the content providing device 1800 from the content DB 131. The content DB 131 may further include information about the content providing device 1800 or a content provider. The information about the content providing device 1800 or the content provider may include, for example, an internet protocol (IP) address of the content providing device 1800 or the content provider, but is not limited thereto.

The content providing device 1800 may collect and analyze reaction information of users with respect to content provided by the content providing device 1800, by using the tag received from the server 130. The content providing device 1800 may include a content providing server.

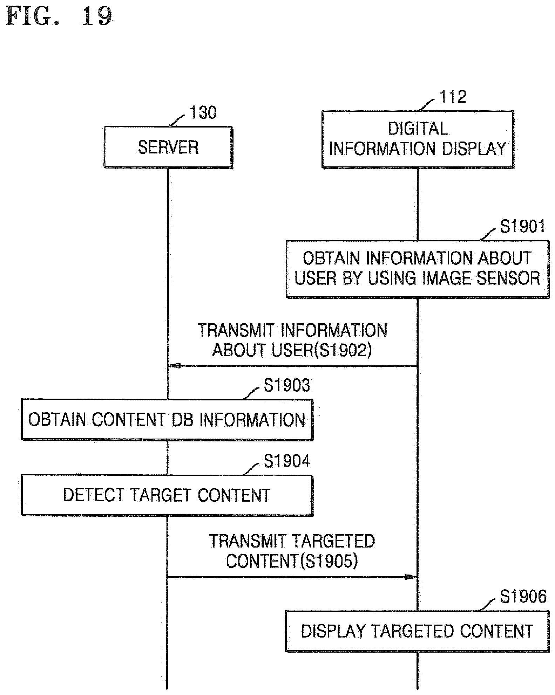

FIG. 19 is a flowchart of a method of providing location-based information according to an embodiment.

Referring to FIG. 19, the method may provide targeted content by using information about a user obtained by the digital information display 112 via anonymous user modeling.

Operations S1901 and S1902 respectively correspond to operations S1304 and S1305 of FIG. 13. The digital information display 112 may transmit ID information of the zone 110 while transmitting the information about the user. The ID information of the zone 110 may be pre-stored in the digital information display 112.

In operation S1903, the server 130 may obtain content DB information regarding the zone 110 from the content DB 131 by using the ID information of the zone 110.

In operation S1904, the server 130 may detect targeted content from the content DB information regarding the zone 110, by using the information about the user obtained in operation S1902.

When the information about the user is as shown in FIG. 14, the server 130 may detect an age distribution, a gender distribution, a distance, and an exposed time based on the information about the user in operation S1904. The server 130 may determine a search keyword based on the age distribution, the gender distribution, the distance, and the exposed time. The server 130 may detect the targeted content from the content DB information by using the search keyword.

Operations S1906 and S1906 may respectively correspond to operations S1806 and S1807 of FIG. 18.

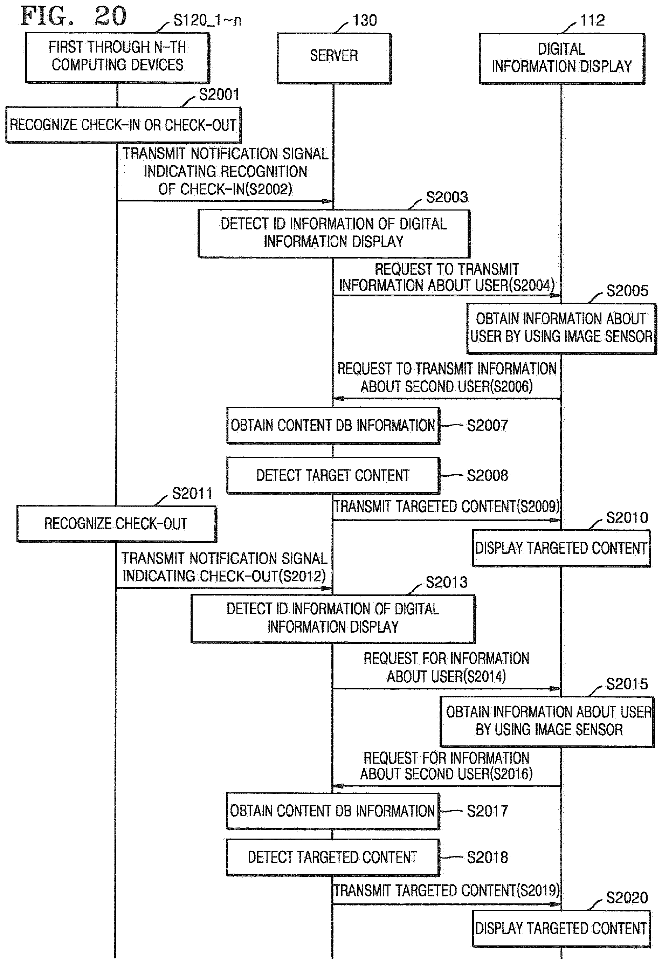

FIG. 20 is a flowchart of a method of providing location-based information according to an embodiment.

Referring to FIG. 20, the method may detect targeted content based on information about a user, which is obtained by the digital information display 112, as check-in or check-out of the first through n-th computing devices 120_1 through 120_n with respect to the zone 110 is recognized.

When the check-in of at least one of the first through n-th computing devices 120_1 through 120_n (i.e., assumed to be the first computing device 120_1) with respect to the zone 110 is recognized in operation S2001, the first computing device 120_1 may transmit a notification signal indicating that the check-in is recognized to the server 130 in operation S2002. At this time, the first computing device 120_1 may also transmit ID information of the zone 110.

Upon receiving the notification signal, the server 130 may detect ID information of the digital information display 112 provided in the zone 110 by using the ID information of the zone 110, which is included in or received together with the notification signal, in operation S2003.

The server 130 may obtain the ID information of the digital information display 112 from a mapping table by using the ID information of the zone 110. According to an embodiment of the present disclosure, a method of obtaining the ID information of the digital information display 112 is not limited thereto.

The mapping table is a table in which ID information of a plurality of zones and ID information of a digital information display provided in a zone are mapped to each other. The server 130 may set a communication channel for transmitting and receiving data to and from the digital information display 112 by using the ID information of the digital information display in the mapping table.

In operation S2004, the server 130 may request the digital information display 112 to transmit information about a user by using the ID information of the digital information display 112. In operation S2005, the digital information display 112 may obtain the information about the user in the zone 110 by using an image sensor. Operation S2005 may be performed in the similar manner as operation S1304.

In operation S2006, the digital information display 112 may transmit the information about the user to the server 130 as information about a second user. The digital information display 112 may also transmit the ID information of the zone 110 together with the information about the second user.

In operation S2007, the server 130 may compare the ID information of the zone 110 received in operation S2002 and the ID information of the zone 110 received in operation S2006. When it is determined that the ID information of the zone 110 received in operation S2002 and the ID information of the zone 110 received in operation S2006 are the same, the server 130 may obtain content DB information regarding the zone 110 from the content DB 131 by using the ID information of the zone 110.

In operation S2008, the server 130 may analyze the information about the second user as described above with reference to operation S1904 of FIG. 19. When a search keyword is detected as a result of the analyzing, the server 130 may detect targeted content from the content DB information regarding the zone 110 by using the search keyword.

In operation S2009, the server 130 may transmit the targeted content to the digital information display 112. The server 130 may transmit the targeted content to the digital information display 112 by using the ID information of the digital information display 112. In operation S2010, the digital information display 112 may display the targeted content.

When check-out of at least one of the first through n-th computing devices 120_1 through 120_n (e.g., the first computing device 120_1) with respect to the zone 110 is recognized in operation S2011, the first computing device 120_1 may transmit a notification signal indicating the check-out to the server 130 in operation S2012. The first computing device 120_1 may transmit the ID information of the zone 110 together with the notification signal indicating the check-out.

In operation S2013, the server 130 may detect ID information of the digital information display 112 by using the ID information of the zone 110 received from the first computing device 120_1.

In operation S2014, the server 130 may transmit a signal of requesting for information about a user to the digital information display 112 by using the ID information of the digital information display 112.

In operation S2015, the digital information display 112 may obtain information about a user as described above with reference to operation S2005. In operation S2016, the digital information display 112 may transmit the information about the second user to the server 130. The digital information display 112 may transmit the ID information of the zone 110 to the server 130 by including the ID information of the zone 110 to the information about the second user. The digital information display 112 may transmit the ID information of the zone 110 to the server 130 together with the information about the second user.

In operation S2017, the server 130 may obtain the content DB information regarding the zone 110 from the content DB 131 by using the ID information of the zone 110 received from the digital information display 112. In operation S2018, the server 130 may detect the targeted content from the content DB information regarding the zone 110 by using the information about the second user. In operation S2019, the server 130 may transmit the targeted content to the digital information display 112.

In operation S2020, the digital information display 112 may display the targeted content.

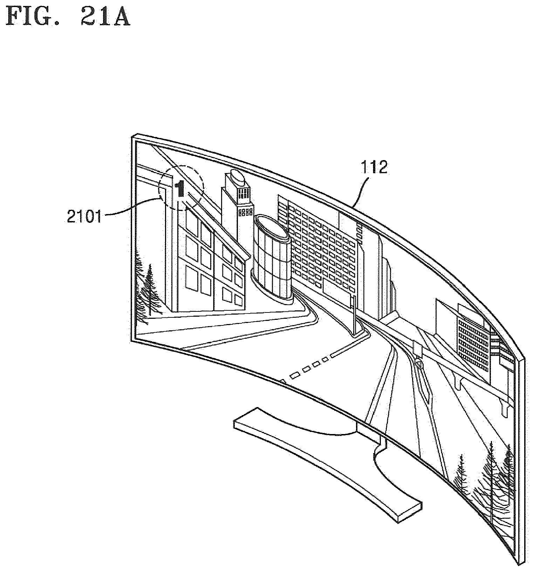

FIGS. 21A to 21C illustrate examples of a screen of targeted content displayed on a digital information display according to various embodiments of the present disclosure.

Referring to FIG. 21A, the targeted content displayed on the digital information display 112 includes ID information 2101 of the targeted content.

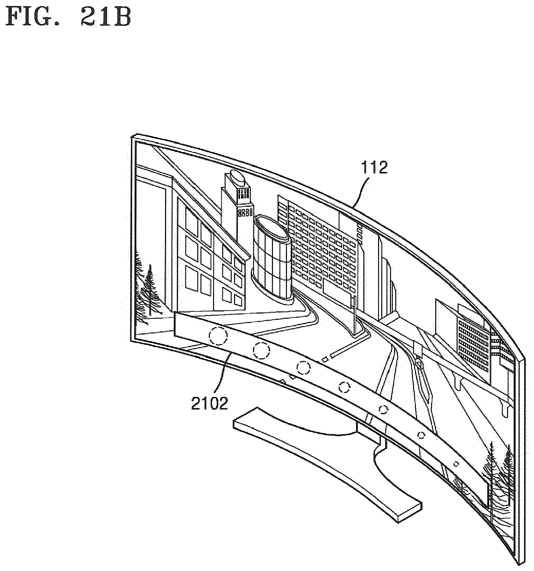

Referring to FIG. 21B, the targeted content displayed on the digital information display 112 includes notification information 2102 indicating existence of next target content provided after the target content being displayed on the digital information display 112. The notification information 2102 may be provided as if a mark move like a wave, but an embodiment of providing the notification information 2102 is not limited thereto. The mark is information for indicating target content being currently displayed among target content to be displayed on the digital information display 112.

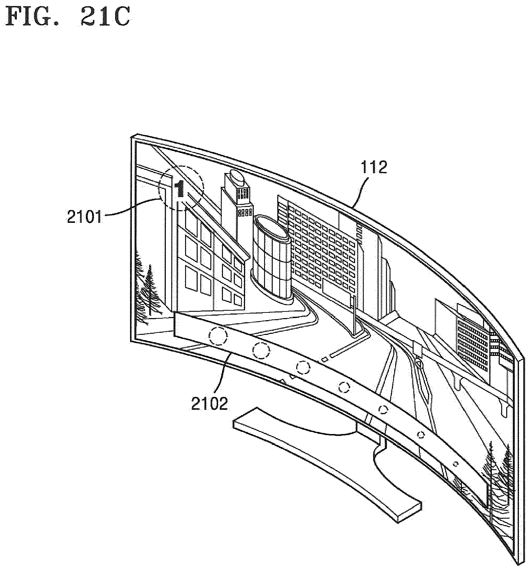

Referring to FIG. 21C, the targeted content displayed on the digital information display 112 includes both the ID information 2101 and the notification information 2102. The examples of the screen of the targeted content provided through the digital information display 112 are not limited to FIGS. 21A through 21C. The ID information 2101 and the notification information 2101 of FIGS. 21A through 21C may be provided from the server 130, or may be generated and provided by the digital information display 112.

When the ID information 2101 and the notification information 2102 are generated and provided by the digital information display 112, the digital information display 112 may generate the ID information 2101 and the notification information 2102 by receiving and analyzing information about the targeted content received from the server 130.

The information about the targeted content may include ID information of the targeted content stored in the content DB 131. The ID information 2101 of the targeted content displayed on the digital information display 112 may have a different form from the ID information of the targeted content included in the information about the targeted content. For example, the ID information of the targeted content stored in the content DB 131 may be expressed in a binary number, whereas the ID information of the targeted content provided through the digital information display 112 may be expressed in a decimal number or in text.

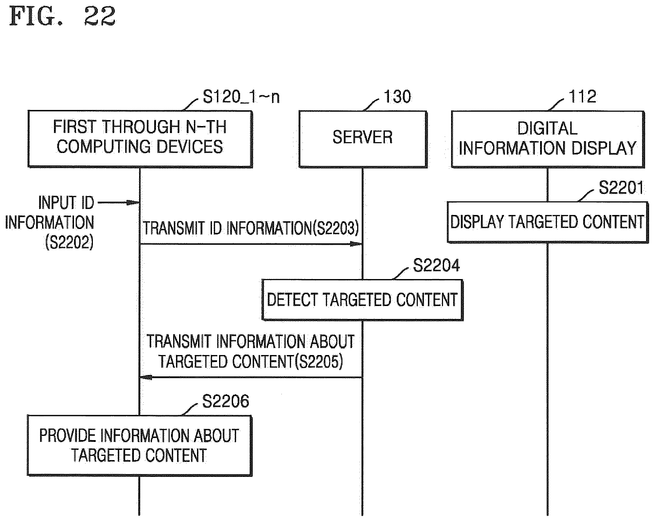

FIG. 22 is a flowchart of a method of providing location-based information according to an embodiment of the present disclosure.

Referring to FIG. 22, the method may provide targeted content through the digital information display 112, and provide information related to the targeted content to the first through n-th computing devices 120_1 through 120_n.

In operation S2201, the digital information display 112 displays the targeted content. When the targeted content is displayed, the digital information display 112 may also provide ID information of the targeted content.

In operation S2202, at least one of the first through n-th computing devices 120_1 through 120_n (e.g., the first computing device 120_1) located in the zone 110 inputs the ID information of the targeted content. The first computing device 120_1 may input the ID information of the targeted content based on the ID information provided by the digital information display 112.

When the ID information of the targeted content is input, the first computing device 120_1 transmits the ID information to the server 130 in operation S2203. The first computing device 120_1 may also transmit, to the server 130, information indicating that the ID information of the targeted content is provided through the digital information display 112.

In operation S2204, the server 130 may detect the targeted content provided to the digital information display 112 based on the ID information of the targeted content. When the targeted content is detected, the server 130 may transmit the information about the targeted content to the first computing device 120_1 in operation S2205. The information about the targeted content may include the targeted content and detailed information about the targeted content.

In operation S2206, the first computing device 120_1 may provide the targeted content and the detailed information about the targeted content, which are provided through the digital information display 112, to the user. The first computing device 120_1 may first output a query about providing of the targeted content. Accordingly, the user of the first computing device 120_1 may receive the targeted content and the detailed information about the targeted content when the user wants to view them. The detailed information about the targeted content may include webpage information of a targeted content provider, information describing the targeted content, and/or comments on the targeted content, but is not limited thereto.

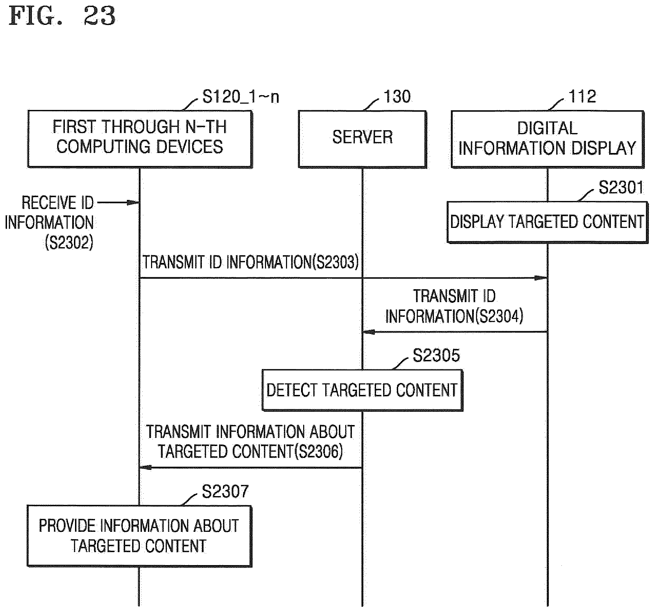

FIG. 23 is a flowchart of a method of providing location-based information according to an embodiment of the present disclosure.

Referring to FIG. 23, the method provides targeted content and ID information of the targeted content together through the digital information display 112, and provides information related to the targeted content to the first through n-th computing devices 120_1 through 120_n.

Since operations S2301, S2302, and S2305 through S2307 of FIG. 23 respectively correspond to operations S2201, S2202, and S2204 through S2206 of FIG. 22, details thereof are not provided again.

In operation S2302, at least one of the first through n-th computing devices 120_1 through 120_n (e.g., the first computing device 120_1) receives the ID information of the targeted content from the user. In operation S2303, the first computing device 120_1 transmits the ID information of the targeted content to the digital information display 112. In operation S2304, the digital information display 112 transmits the ID information of the targeted content to the server 130.

Accordingly, in operation S2305, the server 130 may detect the targeted content by using the ID information of the targeted content, and transmit information about the targeted content to the first computing device 120_1.

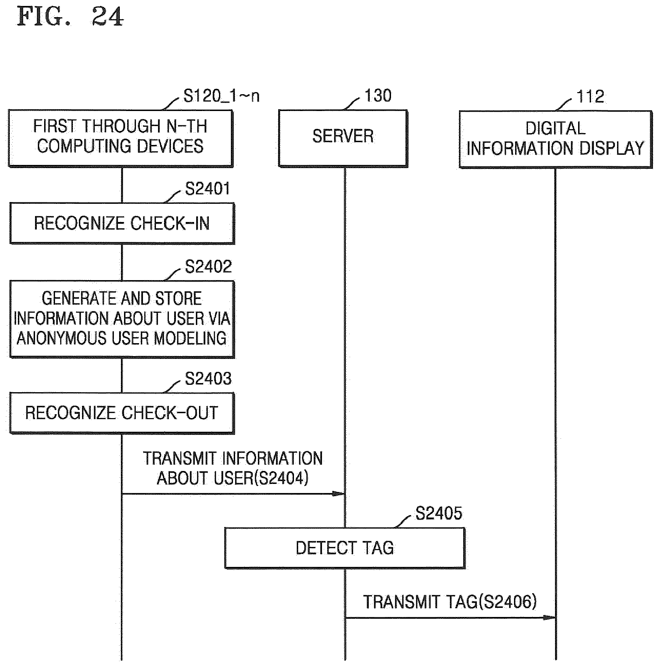

FIG. 24 is a flowchart of a method of providing location-based information according to an embodiment of the present disclosure.

Referring to FIG. 24, the method may provide, to a content providing device 1800, a tag detected based on information about a user generated by the first through n-th computing devices 120_1 through 120_n from when check-in with respect to the zone 110 is recognized to when check-out with respect to the zone 110 is recognized. The first through n-th computing devices 120_1 through 120_n may generate the information about the user via anonymous user modeling. The method of FIG. 24 may be performed when targeted content is provided by the digital information display 112 in the zone 110.

Operations S2401 through S2406 of FIG. 24 may operate in the similar manner as the method of FIG. 18, excluding details related to information about a first user from operations S1802, S1808 through S1810, S1812, and S1813.

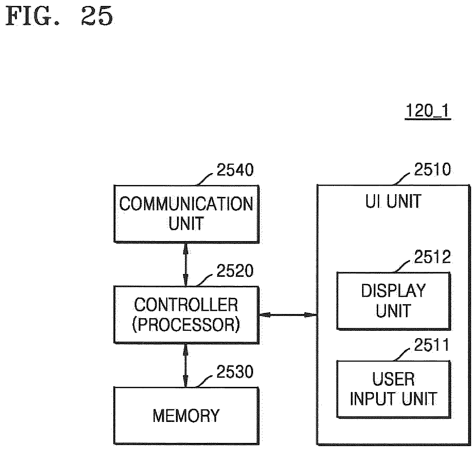

FIG. 25 is a block diagram of the first computing device 120_1 according to embodiment of the present disclosure.

Referring to FIG. 25, the first computing device 120_1 may include a user interface (UI) unit 2510, a controller 2520, a memory 2530, and a communication unit 2540.

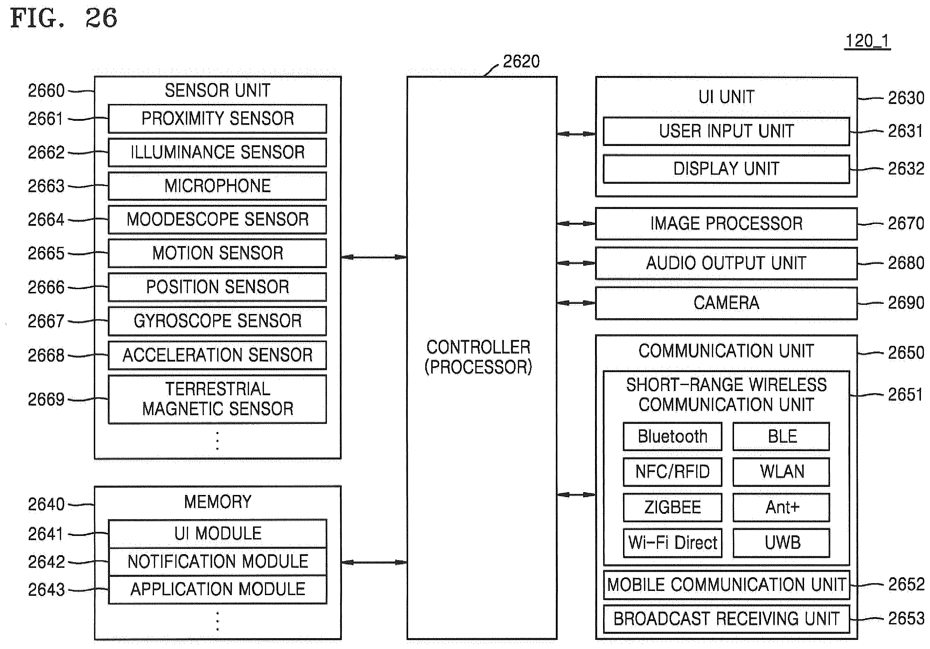

The components of FIG. 25 are not all essential components of the first computing device 120_1. The first computing device 120_1 may include more or less components than those shown in FIG. 25. For example, the first computing device 120_1 may have a structure as will be described below with reference to FIG. 26.

The UI unit 2510 may receive or output information based on interactions between the first computing device 120_1 and the user. The UI unit 2510 may include a user input unit 2511 and a display unit 2512.

The user input unit 2511 may receive a user input based on a screen displayed on the display unit 2512. The user input unit 2511 may be mounted on the first computing device 120_1 to receive a user input for controlling the first computing device 120_1.

Examples of the user input unit 2511 mounted on the first computing device 120_1 may include a keypad, a dome switch, a touch pad (a touch capacitance type, a pressure resistance film type, an infrared light detecting type, a surface ultrasound conducting type, an integral tension measuring type, or a piezo-effect type), a jog wheel, and/or a jog switch, but are not limited thereto.

Input information of the user input through the user input unit 2511 may include at least one of touch-based input information, movement-based input information, vision-based input information, and user voice-based input information, but is not limited thereto.

Examples of the touch-based input information may include input information based on tap (or touch), long tap (or long touch), touch and hold, touch and drag, double-tap, drag, panning, flick, drag and drop, and/or sweep, but are not limited thereto.

Examples of the movement-based input information may include input information based on a movement-based user gesture on the first computing device 120_1, such as shaking, rotating, and/or lifting the first computing device 120_1, but are not limited thereto.

Examples of the vision-based input information may include information recognized by analyzing an input image obtained by a camera (not shown) included in the first computing device 120_1 without contact between the first computing device 120_1 and the user, but are not limited thereto.

The display unit 2512 may be configured to display information processed by the first computing device 120_1.

When the display unit 2512 is configured as a touch screen by forming a layer structure with a touch pad, the display unit 2512 may also be used as an input device as well as an output device. The display unit 2512 may include at least one of a liquid crystal display (LCD), a thin-film transistor-LDC (TFT-LCD), an organic light-emitting diode (OLED), a flexible display, a three-dimensional (3D) display, and an electrophoretic display.

According to an embodiment of the first computing device 120_1, the first computing device 120_1 may include at least two display units 2512. The at least two display units 2512 may be disposed to face each other by using a hinge.

The controller 2520 may perform operations of the first through n-th computing devices 120_1 through 120_n according to descriptions of FIGS. 2, 3, 5, 12, 13, 15, 17, 18, 19, 20, 22, 23, and/or 24 by using programs stored in the memory 2530. The controller 2520 may be a processor controlling overall operations of the first computing device 120_1.

The memory 2530 may store programs for processes and controls of the controller 2520. The programs stored in the memory 2530 may include operating system (OS) programs and various application programs. Examples of the various application programs may include a location-based information providing application, an anonymous user modeling application for performing anonymous user modeling on information about a user obtained by the first computing device 120_1, and an application for detecting check-in or check-out with respect to the zone 110, but are not limited thereto.

The memory 2530 may store information managed by an application program.

The memory 2530 may include at least storage medium from among a flash memory, a hard disk, a multimedia card micro type memory, a card type memory (e.g., a secure digital (SD) card or an extreme digital (XD) card), a random access memory (RAM), a static RAM (SRAM), a read-only memory (ROM), an electrically erasable programmable ROM (EEPROM), a programmable ROM (PROM), a magnetic memory, a magnetic disk, and an optical disk.

The first computing device 120_1 may be configured to use a web storage server or a cloud server that performs a storage function of the memory 2630 in the Internet. In this case, information about a screen displayed on the display unit 2512 may be provided from the web storage or cloud server.

The communication unit 2540 may include at least one component for communication between the first computing device 120_1 and at least one external device (e.g., at least one of a wearable device such as a smart watch, a server, the beacon signal generator 111, the digital information display 112, another computing device of the user, and a computing device of another user).

For example, the communication unit 2540 may include at least one of a short-range wireless communication unit 2651, a mobile communication unit 2652, and a broadcast receiving unit 2653 as shown in FIG. 26, but components included in the communication unit 2540 are not limited thereto.

FIG. 26 is a block diagram of a first computing device according to various embodiments of the present disclosure.

Referring to FIG. 26, the first computing device 120_1 may include a controller 2620, a UI unit 2630, a memory 2640, a communication unit 2650, a sensor unit 2660, an image processor 2670, an audio output unit 2680, and a camera 2690.

The first computing device 120_1 may include a battery. The battery may be embedded in the first computing device 120_1 or detachably included in the first computing device 120_1. The battery may supply power to all components included in the first computing device 120_1.The first computing device 120_1 may receive power from an external power supply apparatus (not shown) through the communication nit 2650. The first computing device 120_1 may further include a connector to be connected to the external power supply apparatus.

The controller 2620, the UI unit 2630, the memory 2640, and the communication unit 2650 of FIG. 26 may be the same or similar to the controller 2520, the UI unit 2510, the memory 2530, and the communication unit 2540 of FIG. 25.

A user input unit 2631 and a display unit 2632 of FIG. 26 may be the same or similar to the user input unit 2511 and the display unit 2512 of FIG. 25.

Programs stored in the memory 2640 may be classified into a plurality of modules according to functions. For example, the programs may be classified into a UI module 2641, a notification module 2642, and/or an application module 2643, but are not limited thereto. For example, when the display 2632 is combined with a touch panel layer, the plurality of modules may include a touch screen module.

The UI module 2641 may provide, to the controller 2620, graphical user interface (GUI) information for obtaining information about a user, GUI information for inputting ID information of targeted content, and/or GUI information for providing various types of notification information. The UI module 2641 may provide, to the controller 2620, a UI and/or a GUI specialized with respect to each application installed in the first computing device 120_1.

The notification module 2642 may generate a signal indicating a check-in or check-out recognition state of the first computing device 120_1, but a notification generated by the notification module 2642 is not limited thereto.

The notification module 2642 may output a notification signal in a form of a video signal through the display unit 2632. The notification module 2642 may output a notification signal in a form of an audio signal through the audio output unit 2680. However, a form of a notification signal output by the notification module 2642 is not limited thereto.

The application module 2643 may include various applications, such as the anonymous user modeling application and the application for detecting check-in or check-out, which are set in the first computing device 120_1. The anonymous user modeling application according to an embodiment may be connected to and operated with another application set in the first computing device 120_1.

The communication unit 2650 may include at least one component for communication between the first computing device 120_1 and at least one external device (e.g., at least one of the beacon signal generator 111, the server 130, the digital information display 112, the devices 121 and 122, and a wearable device (not shown). For example, the communication unit 2650 may include at least one of the short-range wireless communication unit 2651, the mobile communication unit 2652, and the broadcast receiving unit 2653, but a component included in the communication unit 2650 is not limited thereto.

The short-range wireless communication unit 2651 may include at least one module capable of Bluetooth communication, BLE communication, NFC (radio frequency ID (RFID) communication), wireless local area network (WLAN) (Wi-Fi) communication, Zigbee communication, Ant+ communication, Wi-Fi direct (WFD) communication, or ultra wideband (UWB) communication, and but components included in the short-range wireless communication unit 2651 are not limited thereto. For example, the short-range wireless communication unit 2651 may include an infrared data association (irDA) communication module.

The short-range wireless communication unit 2651 may receive a beacon signal generated by the beacon signal generator 111.

The mobile communication unit 2652 transmits and receives a wireless signal to and from at least one of a base station, an external terminal, and a server, on a mobile communication network. A wireless signal may include data having various formats according to transmission and reception of a voice call signal, a video telephone call signal, or a text/multimedia message.

The broadcast receiving unit 2653 receives a broadcast signal and/or broadcast related information from an external source, through a broadcast channel. The broadcast channel may include a satellite channel or a terrestrial broadcasting channel, but is not limited thereto.

The communication unit 2650 may transmit at least one piece of information generated by the first computing device 120_1 according to an embodiment to at least one external device, or receive information from at least one external device. For example, the communication unit 2650 may receive a beacon signal generated from the beacon signal generator 111, and transmit, to the server 130, information about a user obtained by the first computing device 120_1 via anonymous user modeling.

The sensor unit 2660 may include a proximity sensor 2661 detecting proximity of a user to the first computing device 120_1, an illuminance sensor 2662 (or an optical sensor or an LED sensor), detecting lighting around the first computing device 120_1, a microphone 2663 recognizing voice of the user of the first computing device 120_1, a Moodscope sensor 2664 detecting a mood of the user of the first computing device 120_1, a motion sensor 2665 detecting activity, a position sensor 2666 (e.g., a global positioning system (GPS) receiver) detecting a position of the first computing device 120_1, a gyroscope sensor 2667 measuring an azimuth of the first computing device 120_1, an acceleration sensor 2668 (accelerometer) measuring a tilt and acceleration of the first computing device 120_1 based on the ground surface, and/or a terrestrial magnetic sensor 2669 detecting azimuth orientation based on the first computing device 120_1, but components included in the sensor unit 2660 are not limited thereto.

For example, the sensor unit 2660 may include a temperature/humidity sensor, a gravity sensor, an altitude sensor, a chemical sensor (e.g., an odorant sensor), an atmospheric pressure sensor, a fine dust measuring sensor, an infrared sensor, an ozone level sensor, a carbon dioxide (CO2) sensor, and/or a network sensor (e.g., WiFi, Bluetooth, 3G, LTE, or NFC-based network sensor).

The sensor unit 2660 may include a pressure sensor (e.g., a touch sensor, a piezoelectric sensor, or a physical button), a status sensor (e.g., an earphone terminal, a digital multimedia broadcasting (DMB) antenna, or a standard terminal (e.g., a terminal for recognizing a charging level, a terminal for recognizing PC connection, or a terminal for recognizing dock connection)), a time sensor, and/or a health sensor (e.g., a bio-sensor, a heart rate sensor, a blood flow rate sensor, a diabetic sensor, a blood pressure sensor, or a stress sensor), but a sensor included in the sensor unit 2660 according to an embodiment is not limited thereto.

The microphone 2663 may receive an audio signal input from outside the first computing device 120_1, convert the audio signal to an electric audio signal, and transmit the electric audio signal to the controller 2620. The microphone 2663 may be configured to perform an operation based on at least one of various noise removing algorithms for removing noise generated while receiving the audio signal. The microphone 2663 may be referred to as an audio input unit.

A result detected by the sensor unit 2660 is transmitted to the controller 2620.

The controller 2620 may determine a location of the user of the first computing device 120_1 based on a sensing value received from the sensor unit 2660(e.g., the illuminance sensor 2662).

The controller 2620 may control overall operations of the first computing device 120_1. For example, the controller 2620 may execute programs stored in the memory 2640 to control the sensor unit 2660, the memory 2640, the UI unit 2630, the image processor 2670, the audio output unit 2680, the camera 2690, and/or the communication unit 2650.

The controller 2620 may perform operations based on at least one of the methods of FIGS. 2, 3, 5, 12, 13, 15, 17, 18, 19, 20, 22, 23, and 24.

The first computing device 120_1 may include a plurality of the controllers 2620 based on an operation environment. For example, the controller 2620 may include a processor that operates in a low power mode of the first computing device 120_1 and a processor that operates in a normal mode of the first computing device 120_1. The controller 2620 may include a plurality of processors classified according to components included in the first computing device 120_1.

The image processor 2670 processes image data received from the communication unit 2650 or stored in the memory 2640 such that the image data is displayed on the display unit 2632.

The audio output unit 2680 may output audio data received from the communication unit 2650 or stored in the memory 2640. The audio output unit 2680 may output a sound signal (e.g., notification sound) related to a function performed by the first computing device 120_1. The audio output unit 2680 may output notification sound notifying check-in or check-out with respect to the zone 110. The audio output unit 2680 may include a speaker and/or a buzzer, but is not limited thereto.

The camera 2690 may obtain an image frame of a still image or a moving image through an image sensor, when the first computing device 120_1 is in a video call mode or a photographing mode. The camera 2690 may obtain and transmit, to the controller 2620, a finger gesture image of the user of the first computing device 120_1. The controller 2620 input ID information of targeted content, search a web browser, view a webpage, and/or perform a user activity based on an SNS application, based on a finger gesture image of the user, but an embodiment is not limited thereto. An image captured through an image sensor may be processed by the controller 2620 or a separate image processor (not shown).

An image frame processed by the camera 2690 may be stored in the memory 2640 or externally transmitted through the communication unit 2650. The first computing device 120_1 may include at least two cameras 2690 according to an embodiment of the present disclosure.

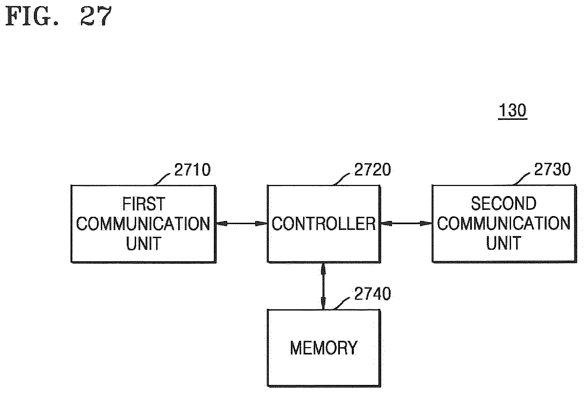

FIG. 27 is a block diagram of a server according to an embodiment of the present disclosure.

Referring to FIG. 27, the server 130 includes a first communication unit 2710, a controller 2720, a second communication unit 2730, and a memory 2740, but components of the server 130 are not limited to FIG. 27. For example, the first and second communication units 2710 and 2730 may be configured as one communication unit.

The first communication unit 2710 may transmit and receive data to and from the first through n-th computing devices 120_1 through 120_n or the digital information display 112.

The second communication unit 2730 may transmit and receive data to and from the social trend DB 132, the POI information DB 133, and/or the business intelligence information DB 134, as well as the content DB 131. The second communication unit 2730 and the first communication unit 2710 may be a single component.

When the content DB 131, the social trend DB 132, the POI information DB 133, and/or the business intelligence information DB 134 are included in the server 130, the second communication unit 2730 may be configured as a data bus in the server 130.

The memory 2740 may store a program for performing operations of the server 130 described above with reference to FIGS. 12, 13, 15, 17, 18, 19, 20, and/or 22 through 24, and an OS program of the server 130. The memory 2740 may store information about a user received from the first through n-th computing devices 120_1 through 120_n, and information about the zone 110 read from the content DB 131, the POI information DB 133, and/or the business intelligence information DB 134.

The controller 2720 may perform operations of the server 130 described above with reference to FIGS. 12, 13, 15, 17, 18, 19, 20, and/or 22 through 24 by using programs and data stored in the memory 2740.

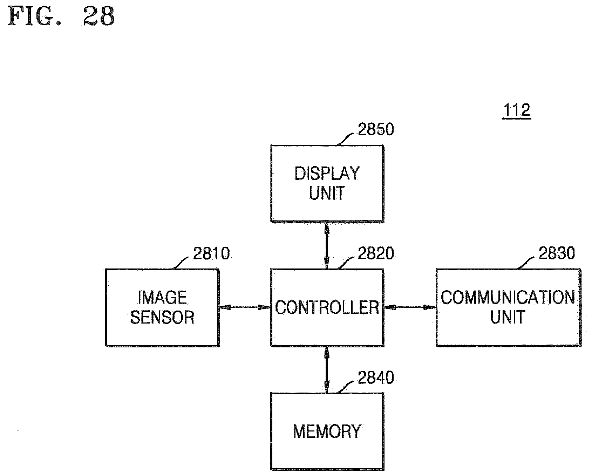

FIG. 28 is a block diagram of a digital information display according to an embodiment of the present disclosure.

Referring to FIG. 28, the digital information display 112 includes an image sensor 2810, a controller 2820, a communication unit 2830, a memory 2840, and a display unit 2850, but components of the digital information display 112 are not limited thereto.

The image sensor 2810 may include a camera.

The communication unit 2830 may include at least one communication module for transmitting and receiving data to and from the server 130 or the first through n-th computing devices 120_1 through 120_n.

The memory 2840 may store targeted content received from the server 130 and/or an operation program for controlling operations of the digital information display 112. The memory 2840 may store ID information of targeted content and/or ID information of the zone 110, but information stored in the memory 2840 is not limited thereto.

The controller 2820 may perform operations of the digital information display 112 as described above with reference to FIGS. 12, 13, 15, 17, 18, 19, 20, 22, and/or 23.

One or more embodiments of the present disclosure described above may also be embodied as computer-readable codes on a computer-readable recording medium. The computer-readable recording medium is any data storage device that may store data which may be thereafter read by a computer system. Examples of the computer-readable recording medium include ROM, RAM, CD-ROMs, magnetic tapes, floppy disks, optical data storage devices, etc. The computer-readable recording medium may also be distributed over network coupled computer systems so that the computer-readable code is stored and executed in a distributed fashion.

It should be understood that various embodiments described herein should be considered in a descriptive sense only and not for purposes of limitation. Descriptions of features or aspects within each embodiment of the present disclosure should typically be considered as available for other similar features or aspects in other various embodiments of the present disclosure.

While the present disclosure has been shown and described with reference to various embodiments thereof, it will be understood by those skilled in the art that various changes in form and details may be made therein without departing from the scope of the present disclosure as defined by the appended claims.

## Claims

1. A server (130) comprising:
a first communication unit (2710) configured to communicate with at least one computing device (120_1 through 120_n) and at least one display (112);
a second communication unit (2730) configured to receive content database, DB, information by being connected to at least one external device;
a memory (2740) configured to store a program for operating the server; and
a processor (2720) configured to control operations of the server by using the program,
wherein the processor is further configured to:
receive, in real time, information about a first user and identification, ID, information of a zone (110) from a computing device among the at least one computing device through the first communication unit as a check-in or a check-out of the computing device with respect to the zone is detected,
obtain the content DB information from an external device among the at least one external device through the second communication unit by using the ID information of the zone,
detect targeted content from the content DB information by using information about a user regarding the zone, and
transmit the targeted content to a display provided in the zone through the first communication unit,
wherein the processor is further configured to:
detect the targeted content by using the information about the user regarding the zone, which comprises the information about the first user, when the information about the first user is received as the check-in of the computing device with respect to the zone is detected, and
detect the targeted content by using the information about the user regarding the zone, excluding the information about the first user and using information based on a user in the zone who is different from the first user when the information about the first user is received as the check-out of the computing device with respect to the zone is detected.

2. The server of claim 1, wherein the information about the first user is based on information about the first user, obtained by the computing device via anonymous user modeling, and information about the first user, obtained by another device synchronized with the computing device via anonymous user modeling.

3. The server of claim 1, wherein the processor is further configured to:
receive information about a second user who is detected by using an image sensor included in the display provided in the zone, and the ID information of the zone from the display through the first communication unit, and
detect the targeted content by further using the information about the second user.

4. The server of claim 1, wherein the processor is further configured to:
obtain, from the at least one external device through the second communication unit, at least one of social trend information based on the zone, point of interest, POI, information based on the zone, and business intelligence information based on the zone, and
use the at least one of the social trend information, the POI information, and the business intelligence information to detect the targeted content.

5. The server of claim 1,
wherein the processor is further configured to:
receive information about a third user from the computing device through the first communication unit as the check-out of the computing device with respect to the zone is detected,
generate at least one keyword by using the information about the third user, and
transmit the at least one keyword to a device that provided the targeted content through the first communication unit, and
wherein the information about the third user is obtained by the computing device via anonymous user modeling from when the check-in is detected to when the check-out is detected.

6. The server of claim 1, wherein the content DB information comprises:
content;
at least one keyword about the content; and
rank information about the content.

7. A method of providing location-based information, which is performed by a server, the method comprising:
receiving, in real time, information about a first user and identification, ID, information of a zone from a computing device as a check-in or a check-out of the computing device with respect to the zone is detected;
obtaining content database, DB, information by using the ID information of the zone;
detecting targeted content from the content DB information by using information about a user regarding the zone; and
transmitting the targeted content to a display provided in the zone such that the targeted content is provided through the display,
wherein the detecting of the targeted content comprises:
detecting the targeted content by using the information about the user regarding the zone, which comprises the information about the first user, when the information about the first user is received as the check-in of the computing device with respect to the zone is detected; and
detecting the targeted content by using the information about the user regarding the zone, excluding the information about the first user and using information based on a user in the zone who is different from the first user,
when the information about the first user is received as the check-out of the computing device with respect to the zone is detected.

8. The method of claim 7, wherein the information about the first user is based on information about the first user, obtained by the computing device via anonymous user modeling, and information about the first user, obtained by another device synchronized with the computing device via anonymous user modeling.

9. The method of claim 7, further comprising:
receiving information about a second user who is detected by using an image sensor included in the display, and the ID information of the zone from the display,
wherein the detecting of the targeted content comprises detecting the targeted content by further using the information about the second user.

10. The method of claim 7, wherein the detecting of the targeted content comprises detecting the targeted content by further using at least one of social trend information based on the zone, point of interest, POI, information based on the zone, and business intelligence information based on the zone.

11. The method of claim 7, further comprising:
receiving information about a third user from the computing device as the check-out of the computing device with respect to the zone is detected;
generating at least one keyword by using the information about the third user; and
transmitting the at least one keyword to a device that provided the targeted content,
wherein the information about the third user is obtained by the computing device via anonymous user modeling from when the check-in is detected to when the check-out is detected.

12. The method of claim 11, wherein the at least one keyword is derived from a search string of a search engine.

13. A non-transitory computer-readable recording medium having recorded thereon a program, which when executed by a computer, performs the method of claim 7.

## Patentansprüche

1. Ein Server (130), aufweisend:
eine erste Kommunikationseinheit (2710), die konfiguriert ist, um mit zumindest einer Rechenvorrichtung (120_1) bis 120_n) und zumindest einer Anzeige (112) zu kommunizieren;
eine zweite Kommunikationseinheit (2730), die konfiguriert ist, um Inhaltsdatenbank, DB,-Informationen dadurch zu empfangen, dass sie mit zumindest einer externen Vorrichtung verbunden ist;
einen Speicher (2740), der konfiguriert ist, um ein Programm zum Betreiben des Servers zu speichern; und
einen Prozessor (2720), der konfiguriert ist, um Operationen des Servers mittels des Programms zu steuern,
wobei der Prozessor ferner konfiguriert ist, um:
in Echtzeit Informationen über einen ersten Benutzer und Identifizierungs, ID,-Informationen eines Bereichs (110) von einer Rechenvorrichtung aus der zumindest einen Rechenvorrichtung durch die erste Kommunikationseinheit zu empfangen, wenn ein Check-in oder ein Check-out der Rechenvorrichtung bezüglich des Bereichs erfasst wird,
die Inhalts-DB-Informationen von einer externen Vorrichtung aus der zumindest einen externen Vorrichtung durch die zweite Kommunikationseinheit unter Verwendung der ID-Informationen des Bereichs zu erhalten,
einen zielgerichteten Inhalt aus den Inhalts-DB-Informationen unter Verwendung von Informationen über einen Benutzer bezüglich des Bereichs zu erfassen,
den zielgerichteten Inhalt zu einer im Bereich bereitgestellten Anzeige durch die erste Kommunikationseinheit zu übertragen,
wobei der Prozessor ferner konfiguriert ist, um:
den zielgerichteten Inhalt unter Verwendung der Informationen über den Benutzer bezüglich des Bereichs, die die Informationen über den ersten Benutzer aufweisen, zu erfassen, wenn die Informationen über den ersten Benutzer empfangen werden, wenn der Check-in der Rechenvorrichtung bezüglich des Bereichs erfasst wird, und
den zielgerichteten Inhalt unter Verwendung der Informationen über den Benutzer bezüglich des Bereichs unter Ausschluss der Informationen über den ersten Benutzer und unter Verwendung von Informationen basierend auf einem Benutzer im Bereich, der ein anderer als der erste Benutzer ist, zu erfassen, wenn die Informationen über den ersten Benutzer empfangen werden, wenn der Check-out der Rechenvorrichtung bezüglich des Bereichs erfasst wird.

2. Der Server nach Anspruch 1, wobei die Informationen über den ersten Benutzer auf Informationen über den ersten Benutzer, die durch die Rechenvorrichtung über anonyme Benutzermodellierung erhalten werden, und auf Informationen über den ersten Benutzer, die durch eine mit der Rechenvorrichtung synchronisierte weitere Vorrichtung über anonyme Benutzermodellierung erhalten werden, basieren.

3. Der Server nach Anspruch 1, wobei der Prozessor ferner konfiguriert ist, um:
Informationen über einen zweiten Benutzer, der unter Verwendung eines Bildsensors, der in der im Bereich bereitgestellten Anzeige enthalten ist, erfasst wird, und die ID-Informationen des Bereichs von der Anzeige durch die erste Kommunikationseinheit zu empfangen, und
den zielgerichteten Inhalt dadurch, dass ferner die Informationen über den zweiten Benutzer verwendet werden, zu erfassen.

4. Der Server nach Anspruch 1, wobei der Prozessor ferner konfiguriert ist, um:
von der zumindest einen externen Vorrichtung durch die zweite Kommunikationseinheit zumindest eines von Informationen über einen gesellschaftlichen Trend basierend auf dem Bereich, Informationen über einen Punkt von Interesse, POI, basierend auf dem Bereich und Informationen über Business Intelligence basierend auf dem Bereich zu erhalten, und
das zumindest eine der Informationen über einen gesellschaftlichen Trend, der POI-Informationen und der Informationen über Business Intelligence zu verwenden, um den zielgerichteten Inhalt zu erfassen.

5. Der Server nach Anspruch 1,
wobei der Prozessor ferner konfiguriert ist, um:
Informationen über einen dritten Benutzer von der Rechenvorrichtung durch die erste Kommunikationseinheit zu empfangen, wenn der Check-out der Rechenvorrichtung bezüglich des Bereichs erfasst wird,
zumindest ein Stichwort unter Verwendung der Informationen über den dritten Benutzer erzeugen, und
das zumindest eine Stichwort durch die erste Kommunikationseinheit zu einer Vorrichtung, die den zielgerichteten Inhalt bereitstellte, zu übertragen, und
wobei die Informationen über den dritten Benutzer durch die Rechenvorrichtung über anonyme Benutzermodellierung von einem Zeitpunkt, an dem der Check-in erfasst wird, bis zu einem Zeitpunkt, an dem der Check-out erfasst wird, erhalten werden.

6. Der Server nach Anspruch 1, wobei die Inhalts-DB-Informationen aufweisen:
Inhalt,
zumindest ein Stichwort über den Inhalt; und
Ranginformationen über den Inhalt.

7. Ein Verfahren zur Bereitstellung von standortbasierten Informationen, das durch einen Server ausgeführt wird, wobei das Verfahren aufweist:
Empfangen von Informationen über einen ersten Benutzer und Identifizierungs, ID,-Informationen eines Bereichs in Echtzeit von einer Rechenvorrichtung, wenn ein Check-in oder ein Check-out der Rechenvorrichtung bezüglich des Bereichs erfasst wird;
Erhalten von Inhaltsdatenbank, DB,-Informationen unter Verwendung der ID-Informationen des Bereichs;
Erfassen des zielgerichteten Inhalts aus den Inhalts-DB-Informationen unter Verwendung von Informationen über einen Benutzer bezüglich des Bereichs; und
Übertragen des zielgerichteten Inhalts zu einer im Bereich bereitgestellten Anzeige derart, dass der zielgerichtete Inhalt durch die Anzeige bereitgestellt wird,
wobei das Erfassen des zielgerichteten Inhalts aufweist:
Erfassen des zielgerichteten Inhalts unter Verwendung der Informationen über den Benutzer bezüglich des Bereichs, die die Informationen über den ersten Benutzer aufweisen, wenn die Informationen über den ersten Benutzer empfangen werden, wenn der Check-in der Rechenvorrichtung bezüglich des Bereichs erfasst wird; und
Erfassen des zielgerichteten Inhalts unter Verwendung der Informationen über den Benutzer bezüglich des Bereichs unter Ausschluss der Informationen über den ersten Benutzer und unter Verwendung von Informationen basierend auf einem Benutzer im Bereich, der ein anderer als der erste Benutzer ist, wenn die Informationen über den ersten Benutzer empfangen werden, wenn der Check-out der Rechenvorrichtung bezüglich des Bereichs erfasst wird.

8. Das Verfahren nach Anspruch 7, wobei die Informationen über den ersten Benutzer auf Informationen über den ersten Benutzer, die durch die Rechenvorrichtung über anonyme Benutzermodellierung erhalten werden, und auf Informationen über den ersten Benutzer, die durch eine mit der Rechenvorrichtung synchronisierte weitere Vorrichtung über anonyme Benutzermodellierung erhalten werden, basieren.

9. Das Verfahren nach Anspruch 7, ferner aufweisend:
Empfangen von Informationen über einen zweiten Benutzer, der unter Verwendung eines Bildsensors, der in der Anzeige enthalten ist, erfasst wird, und der ID-Informationen des Bereichs von der Anzeige,
wobei das Erfassen des zielgerichteten Inhalts das Erfassen des zielgerichteten Inhalts dadurch, dass ferner die Informationen über den zweiten Benutzer verwendet werden, aufweist.

10. Das Verfahren nach Anspruch 7, wobei das Erfassen des zielgerichteten Inhalts das Erfassen des zielgerichteten Inhalts dadurch, dass ferner zumindest eines von Informationen über einen gesellschaftlichen Trend basierend auf dem Bereich, Informationen über einen Punkt von Interesse, POI, basierend auf dem Bereich und Informationen über Business Intelligence basierend auf dem Bereich verwendet werden, aufweist.

11. Das Verfahren nach Anspruch 7, ferner aufweisend:
Empfangen von Informationen über einen dritten Benutzer von der Rechenvorrichtung, wenn der Check-out der Rechenvorrichtung bezüglich des Bereichs erfasst wird;
Erzeugen zumindest eines Stichworts unter Verwendung der Informationen über den dritten Benutzer; und
Übertragen des zumindest einen Stichworts zu einer Vorrichtung, die den zielgerichteten Inhalt bereitstellte,
wobei die Informationen über den dritten Benutzer durch die Rechenvorrichtung über anonyme Benutzermodellierung von einem Zeitpunkt, an dem der Check-in erfasst wird, bis zu einem Zeitpunkt, an dem der Check-out erfasst wird, erhalten werden.

12. Das Verfahren nach Anspruch 11, wobei das zumindest eine Stichwort aus einem Suchtext einer Suchmaschine abgeleitet wird.

13. Ein nicht-transitorisches computerlesbares Aufzeichnungsmedium, auf dem ein Programm aufgezeichnet ist, welches, wenn es von einem Computer ausgeführt wird, das Verfahren nach Anspruch 7 ausführt.

## Revendications

1. Un serveur (130), comprenant :
une première unité de communication (2710) configurée pour communiquer avec au moins un dispositif informatique (120_1 à 120_n) et au moins un affichage (112) ;
une seconde unité de communication (2730) configurée pour recevoir des informations de base de données, DB, de contenus en étant connectée à au moins un dispositif externe ;
une mémoire (2740) configurée pour stocker un programme pour exploiter le serveur ; et
un processeur (2720) configuré pour commander des opérations du serveur en utilisant le programme,
le processeur étant en outre configuré pour :
recevoir, en temps réel, des informations sur un premier utilisateur et des informations d'identification, ID, d'une zone (110) à partir d'un dispositif informatique parmi l'au moins un dispositif informatique, par l'intermédiaire de la première unité de communication, lorsqu'un enregistrement ou un désenregistrement du dispositif informatique par rapport à la zone est détecté,
obtenir les informations de DB de contenus d'un dispositif externe parmi l'au moins un dispositif externe, par l'intermédiaire de la seconde unité de communication, en utilisant les informations d'ID de la zone,
détecter un contenu ciblé à partir des informations de DB de contenus en utilisant des informations sur un utilisateur relativement à la zone, et
transmettre le contenu ciblé à un affichage prévu dans la zone par l'intermédiaire de la première unité de communication,
le processeur étant en outre configuré pour :
détecter le contenu ciblé en utilisant des informations sur l'utilisateur relativement à la zone qui comprennent les informations sur le premier utilisateur lorsque les informations sur le premier utilisateur sont reçues lorsque l'enregistrement du dispositif informatique par rapport à la zone est détecté, et
détecter le contenu ciblé en utilisant les informations sur l'utilisateur relativement à la zone, à l'exclusion des informations sur le premier utilisateur et en utilisant des informations basées sur un utilisateur se trouvant dans la zone qui est différent du premier utilisateur lorsque les informations sur le premier utilisateur sont reçues lorsque le désenregistrement du dispositif informatique par rapport à la zone est détecté.

2. Le serveur selon la revendication 1, dans lequel les informations sur le premier utilisateur sont basées sur des informations sur le premier utilisateur obtenues du dispositif informatique via une modélisation utilisateur anonyme, et sur des informations sur le premier utilisateur obtenues d'un autre dispositif synchronisé avec le dispositif informatique via une modélisation utilisateur anonyme.

3. Le serveur selon la revendication 1, dans lequel le processeur est en outre configuré pour :
recevoir des informations sur un deuxième utilisateur qui est détecté en utilisant un capteur d'image qui est compris dans l'affichage prévu dans la zone, et les informations d'ID de la zone à partir de l'affichage, par l'intermédiaire de la première unité de communication, et
détecter le contenu ciblé en utilisant en outre les informations sur le deuxième utilisateur.

4. Le serveur selon la revendication 1, dans lequel le processeur est en outre configuré pour :
obtenir, de l'au moins un dispositif externe, par l'intermédiaire de la seconde unité de communication, des informations sur une tendance sociale basées sur la zone et/ou des informations sur un point d'intérêt, POI, basées sur la zone et/ou des informations sur l'informatique décisionnelle basées sur la zone, et
utiliser les informations sur une tendance sociale et/ou les informations POI et/ou les informations sur l'informatique décisionnelle pour détecter le contenu ciblé.

5. Le serveur selon la revendication 1,
dans lequel le processeur est en outre configuré pour :
recevoir des informations sur un troisième utilisateur à partir du dispositif informatique, par l'intermédiaire de la première unité de communication, lorsque le désenregistrement du dispositif informatique par rapport à la zone est détecté,
générer au moins un mot-clé en utilisant les informations sur le troisième utilisateur, et
transmettre l'au moins un mot-clé à un dispositif qui a fourni le contenu ciblé par l'intermédiaire de la première unité de communication, et
les informations sur le troisième utilisateur étant obtenues du dispositif informatique via une modélisation utilisateur anonyme à partir du moment où l'enregistrement est détecté jusqu'au moment où le désenregistrement est détecté.

6. Le serveur selon la revendication 1, dans lequel les informations de DB de contenus comprennent :
un contenu ;
au moins un mot-clé concernant le contenu ; et
des informations de rang sur le contenu.

7. Un procédé pour fournir des informations basées sur un emplacement effectué par un serveur, le procédé comprenant :
recevoir, en temps réel, des informations sur un premier utilisateur et des informations d'identification, ID, d'une zone à partir d'un dispositif informatique lorsqu'un enregistrement ou un désenregistrement du dispositif informatique par rapport à la zone est détecté ;
obtenir des informations de base de données, DB, de contenus en utilisant les informations d'ID de la zone ;
détecter un contenu ciblé à partir des informations de DB de contenus en utilisant des informations sur un utilisateur relativement à la zone ; et
transmettre le contenu ciblé à un affichage prévu dans la zone de telle manière que le contenu ciblé est fourni par l'affichage,
la détection du contenu ciblé comprenant :
détecter le contenu ciblé en utilisant les informations sur l'utilisateur relativement à la zone qui comprennent les informations sur le premier utilisateur lorsque les informations sur le premier utilisateur sont reçues lorsque l'enregistrement du dispositif informatique par rapport à la zone est détecté ; et
détecter le contenu ciblé en utilisant les informations sur l'utilisateur relativement à la zone, à l'exclusion les informations sur le premier utilisateur et en utilisant des informations basées sur un utilisateur se trouvant dans la zone qui est différent du premier utilisateur lorsque les informations sur le premier utilisateur sont reçues lorsque le désenregistrement du dispositif informatique par rapport à la zone est détecté.

8. Le procédé selon la revendication 7, dans lequel les informations sur le premier utilisateur sont basées sur des informations sur le premier utilisateur obtenues du dispositif informatique via une modélisation utilisateur anonyme, et sur des informations sur le premier utilisateur obtenues d'un autre dispositif synchronisé avec le dispositif informatique via une modélisation utilisateur anonyme.

9. Le procédé selon la revendication 7, comprenant en outre :
recevoir des informations sur un deuxième utilisateur qui est détecté en utilisant un capteur d'image compris dans l'affichage, et les informations d'ID de la zone à partir de l'affichage,
la détection du contenu ciblé comprenant la détection du contenu ciblé en utilisant en outre les informations sur le deuxième utilisateur.

10. Le procédé selon la revendication 7, dans lequel la détection du contenu ciblé comprend la détection du contenu ciblé en utilisant en outre des informations sur une tendance sociale basées sur la zone et/ou des informations sur un point d'intérêt, POI, basées sur la zone et/ou des informations sur l'informatique décisionnelle basées sur la zone.

11. Le procédé selon la revendication 7, comprenant en outre :
recevoir des informations sur un troisième utilisateur à partir du dispositif informatique lorsque le désenregistrement du dispositif informatique par rapport à la zone est détecté ;
générer au moins un mot-clé en utilisant les informations sur le troisième utilisateur ; et
transmettre l'au moins un mot-clé à un dispositif qui a fourni le contenu ciblé,
les informations sur le troisième utilisateur étant obtenues du dispositif informatique via une modélisation utilisateur anonyme à partir du moment où l'enregistrement est détecté jusqu'au moment où le désenregistrement est détecté.

12. Le procédé selon la revendication 11, dans lequel l'au moins un mot-clé est dérivé d'une chaîne de recherche d'un moteur de recherche.

13. Un support d'enregistrement non transitoire lisible par ordinateur sur lequel est enregistré un programme qui, lorsqu'il est exécuté par un ordinateur, effectue le procédé de la revendication 7.
